Europäisches Patentamt

European Patent Office

Office européen des brevets

(11) Veröffentlichungsnummer: **0 299 071 B1**

# EUROPÄISCHE PATENTSCHRIFT

(45) Veröffentlichungstag der Patentschrift: **12.08.92**

(51) Int. Cl.5: **B21C 37/08**

(21) Anmeldenummer: **87902863.7**

(22) Anmeldetag: **23.01.87**

(86) Internationale Anmeldenummer:
**PCT/SU87/00006**

(87) Internationale Veröffentlichungsnummer:
**WO 88/05349 (28.07.88 88/17)**

(54) **VERFAHREN ZUR BESEITIGUNG DER INNEREN GRATE INNERHALB LÄNGSGESCHWEISSTER LEITUNGEN.**

(43) Veröffentlichungstag der Anmeldung:
**18.01.89 Patentblatt 89/03**

(45) Bekanntmachung des Hinweises auf die
Patenterteilung:
**12.08.92 Patentblatt 92/33**

(84) Benannte Vertragsstaaten:
**DE FR GB IT SE**

(56) Entgegenhaltungen:
**DE-A- 3 332 336**
**SU-A- 256 721**
**SU-A- 612 727**
**SU-A- 730 404**
**SU-A- 1 118 446**

**SOVIET INVENTIONS ILLUSTRATED, Sektion P/O, Woche 8726, 8. Juli 1987, Klasse P/51, Nr. 87-184025/26, Derwent Publications Ltd, London, GB; & SU-A-1 269 872 (KIROV NON-FERR METAL) 15-11-1986**

(73) Patentinhaber: **DNEPROPETROVSKY METAL-LURGICHESKY INSTITUT IMENI L.I. BREZHNE-VA**
**pr. Gagarina, 4**
**Dnepropetrovsk. 320635(SU)**

Patentinhaber: **TSENTRALNY INSTITUT POV-YSHENIA KVALIFICATSII RUKOVODYA-SCHIKH RABOTNIKOV I SPETSIALISTOV CHERNOI METALLURGII**
**Leningradskoe shosse, 18**
**Moskow, 125171(SU)**

(72) Erfinder: **PONOMAREV, Anatoly Konstantinovich**
**ul. Yasenevaya, 10-2-157**
**Moscow, 115561(SU)**
Erfinder: **BEREZOVSKY, Valentin Vladimirovich**
**ul. 26-ti Bakinskikh komissarov, 12-6-33**
**Moscow, 117526(SU)**

EP 0 299 071 B1

IDEM

Erfinder: **VERDEREVSKY, Vadim Anatolievich**
**Volgogradsky pr., 90-25**
**Moscow, 109443(SU)**
Erfinder: **DAMCHENKO, Valentin Nikolaevich**
**ul. Pisarzhevskogo, 7-29**
**Dnepropetrovsk, 320005(SU)**
Erfinder: **MYAGKOV, Jury Petrovich**
**Kutuzovsky pr., 5/3-75**
**Moscow, 121208(SU)**
Erfinder: **KRICHEVSKY, Evgeny Markovich**
**ul. O.Dundicha, 5-91**
**Moscow, 121208(SU)**
Erfinder: **POKLONOV, Gennady Gavrilovich**
**Moskovskaya obl.,Odintsovsky raion**
**pos. Nemchinovka-1, 141013(SU)**
Erfinder: **PANJUSHKIN, Evgeny Nikolaevich**
**ul. Dzerzhinskogo, 18A-43**
**Dnepropetrovsk, 320027(SU)**
Erfinder: **ULYANOV, Viktor Mikhailovich**
**ul. Oktyabrskaya, 2-1 Dnepropetrovskaya obl.**
**Novomoskovsk, 322010(SU)**
Erfinder: **MARAR, Ivan Petrovich**
**Dnepropetrovskaya obl.**
**Novomoskovsk, 322010,( U)**
Erfinder: **DYACHKOV, Anatoly Andreevich**
**ul. Sovetskaya, 9-53 Dnepropetrovskaya obl.**
**Novomoskovsk, 322010(SU)**
Erfinder: **PENKOV, Jury Georgievich**
**Slavyansky bulvar, 11-4-48**
**Moscow, 121352(SU)**
Erfinder: **GOLBERG, Viktor Yakovlevich**
**ul. V.Kozhinoi, 8-3-45**
**Moscow, 121096(SU)**
Erfinder: **VLASOV, Vladimir Mikhailovich**
**pr. Iliicha, 8a-4 Sverdlovskaya obl.**
**Pervouralsk, 623100(SU)**
Erfinder: **GRINBERG, Valery Zelmanovich**
**ul. Lenina, 132-8 Sverdlovskaya obl.**
**Pervouralsk, 623100(SU)**


(74) Vertreter: **Finck, Dieter et al**
**Patentanwälte v. Füner, Ebbinghaus, Finck**
**Mariahilfplatz 2 & 3**
**W-8000 München 90(DE)**

**Beschreibung**

Die Erfindung bezieht sich auf die Herstellung elektrisch geschweißter Rohre, und zwar betrifft sie ein Verfahren zum Entfernen des inneren Grats in elektrisch geschweißten Geradnahtrohren und Vorrichtungen für dessen Realisierung.

Zugrundeliegender Stand der Technik

Gegenwärtig ist die Herstellung von Rohren aus Streifen durch Biegen und anschließendes elektrisches Schweißen weit verbreitet. In den industriell hochentwickelten Ländern der Welt beträgt der Anteil der elektrisch geschweißten Rohre 40 bis 60 % der Gesamtrohrproduktion. Das Vorhandensein eines inneren Grats in diesen Rohren beschränkt jedoch ihren Einsatz auf verschiedenen Gebieten der Technik anstelle nahtloser Rohre, die teurer und vor allem durch höheren Metallverbrauch gekennzeichnet sind.

Das erfindungsgemäße Verfahren und die Vorrichtungen zum Entfernen des inneren Grats in elektrisch geschweißten Geradnahtrohren ermöglichen es, nahtlose Rohre durch elektrisch geschweißte Rohre zu ersetzen.

Es ist ein Verfahren zum Entfernen des inneren Grats in elektrisch geschweißten, kontinuierlich sich in Längsrichtung bewegenden Geradnahtrohren bekannt (siehe Ju. N. Jermoljuk, V.A. Verderevski "Moderne Ausrüstung zur Herstellung elektrisch geschweißter Rohre ohne inneren Grat", Nr. 30, veröffentlicht 1981, Verlag ZNIITEItjazhmash, Moskau S. 30 bis 32), das darin besteht, daß sich ein Meißel nur in einer senkrechten, durch die Längsachse des elektrisch geschweißten Geradnahtrohrs verlaufenden Ebene bewegen kann, seine Schneide im Innern dieses Rohrs auf die volle Höhe des Grats in der Zone der Schweißnaht angesetzt und der Grat ununterbrochen abgeschert wird mit vorherigem Brechen der Späne mit Hilfe einer federnden Einkerbvorrichtung.

In dem bekannten Verfahren zum Entfernen des inneren Grats in elektrisch geschweißten, kontinuierlich sich in Längsrichtung bewegenden Geradnahtrohren kommt es zu einer intensiven Erwärmung der unaufhörlich den inneren Grat abscherenden Meißelschneide. Das führt zum Anfritten des abgescherten Metalls des inneren Grats an der Meißelschneide und zu deren schnellem Abstumpfen und Auskolken, weshalb der Herstellungsprozeß des elektrisch geschweißten Geradnahtrohrs ohne inneren Grat zum Auswechseln des Meißels unterbrochen wird.

Außerdem gewährleistet das Brechen der beim ununterbrochener Entfernen des inneren Grats anfallenden Fließspäne mit Hilfe einer federnden Einkerbvorrichtung kein zuverlässiges Trennen der Späne in maßgerechte Abschnitte von geforderter Länge zum ungehinderten Entfernen derselben zusammen mit dem elektrisch geschweißten, kontinuierlich sich in Längsrichtung bewegenden Geradnahtrohr während des Schweißvorgangs des Rohrs. Das führt zu einem Verstopfen der Zwischenräume zwischen dem elektrisch geschweißten, sich in Längsrichtung bewegenden Geradnahtrohr und dem in gleicher Richtung unbeweglichen Meißelhalter durch die anfallenden Späne, wodurch große Reibungskräfte zwischen der Innenfläche des elektrisch geschweißten Geradnahtrohrs und den steckengebliebenen Spänen entstehen, die als Ursache auftreten können für das Abbrechen des Meißelhalters und die Unterbrechung des Herstellungsprozesses elektrisch geschweißter Geradnahtrohre ohne inneren Grat. Zur Beseitigung der Ursachen für das Abbrechen des Meißelhalters wird die Rohrschweißanlage angehalten, und die Zwischenräume zwischen der Innenfläche des elektrisch geschweißten Geradnahtrohrs und dem Meißelhalter werden durch mit Hilfe von Schneidbrennern angelegte durchgehende Öffnungen im Rohr gereinigt. Das führt zu einer Zunahme der Metallabfälle.

Die Anwendung des bekannten Verfahrens zur Herstellung elektrisch geschweißter Geradnahtrohre ohne inneren Grat in der technologischen Linie einer Rohrschweißanlage führt zu einer Verringerung der Leistung der Anlage und zu einer Zunahme der Metallabfälle, hervorgerufen durch die Notwendigkeit des Anlegens von Öffnungen im Rohr für die Entfernung der steckengebliebenen Späne. Diese Abschnitte der elektrisch geschweißten Geradnahtrohre werden im folgenden herausgeschnitten und dem Abfall zugeführt.

Es ist ein Verfahren zum Entfernen des inneren Grats in elektrisch geschweißten, ununterbrochen sich in Längsrichtung bewegenden Geradnahtrohren bekannt (DE-PS Nr. 924984, bekanntgemacht 1952, Kl. B. 21C 37/08), das darin besteht, daß die Schneiden eines Mehrmeißelwerkzeugs, bestehend aus einem Satz Meißel in Form von Scheiben mit in Bewegungsrichtung des Rohrs zunehmendem Durchmesser, entlang der Mantellinie des Rohrs hintereinander, in Längsrichtung unbeweglich und um eine durch die Mittelpunkte der Scheiben des Mehrmeißelwerkzeugs verlaufende Achse drehbar angebracht sind, wobei das Mehrmeißelwerkzeug relativ zur gedachten Längsachse des zu schweißenden Rohrs versetzt ist, und daß mit diesen Schneiden die Innenfläche des elektrisch geschweißten Geradnahtrohrs in der Schneidzone entlang der Schweißnaht bearbeitet wird.

Die Verwendung von Scheiben als Meißel eines Mehrmeißelwerkzeugs, deren Durchmesser in Bewegungsrichtung des elektrisch geschweißten Geradnahtrohrs zunimmt, erleichtert erheblich die Funktion der Schneiden der Meißel beim ununterbrochenen Abscheren des inneren Grats des elektrisch geschweißten, kontinuierlich sich in Längsrichtung bewegenden Geradnahtrohrs, da die Einschnittiefe jedes Meißels nur einen gewissen Teil der vollen Höhe des Grats ausmacht. Durch die Drehung des Mehrmeißelwerkzeugs wird ein ständiger Wechsel der Abschnitte der den Grat abscherenden Schneiden des Meißels erzielt. Das gewährleistet eine wirksame Abkühlung der Schneiden in der Ruhezeit, in der die Abschnitte der Schneiden eine volle Umdrehung des Mehrmeißelwerkzeugs mitmachen und wieder an den inneren Grat herangeführt werden.

Derartige Arbeitsbedingungen für die Schneiden der Meißel in Form von Scheiben ermöglichen die Herstellung elektrisch geschweißter Geradnahtrohre ohne inneren Grat in der technologischen Linie einer Rohrschweißanlage mit genügend hoher Leistung.

Solch ein rotierendes Mehrmeißelwerkzeug schert jedoch ununterbrochen den inneren Grat im elektrisch geschweißten, in Längsrichtung sich bewegenden Geradnahtrohr unter Bildung eines ununterbrochenen Fließspans ab. Dabei wird der Zwischenraum zwischen der Innenfläche des elektrisch geschweißten Geradnahtrohrs, dem Mehrmeißelwerkzeug und seinem Halter durch diese Späne verstopft. Das führt zur Entstehung großer Reibungskräfte zwischen der Innenfläche dieses Rohrs und den Spänen, die das Abbrechen des Meißelhalters und die Unterbrechung des Herstellungsprozesses elektrisch geschweißter Geradnahtrohre ohne inneren Grat verursachen können.

Zur Beseitigung der Ursachen für das Abbrechen des Meißelhalters wird die Rohrschweißanlage angehalten und die Zwischenräume zwischen der Innenfläche des elektrisch geschweißten Geradnahtrohrs, dem Mehrmeißelwerkzeug und seinem Halter werden durch mit Hilfe von Schneidbrennern angelegte durchgehende Öffnungen im Rohr gereinigt.

Das alles führt zu einer Minderung der Leistung der Rohrschweißanlage, wenn solch ein Verfahren zur Entfernung das inneren Grats im Rohr in der technologischen Linie der Anlage verwendet wird. Außerdem werden die Abschnitte eines solchen Rohrs mit den für die Entfernung der Späne angelegten Öffnungen von diesem Rohr abgeschnitten, was zu einer Zunahme der Metallabfälle führt.

Es ist eine Vorrichtung zum Entfernen des inneren Grats in elektrisch geschweißten, in Längsrichtung sich bewegenden Geradnahtrohren bekannt (siehe Ju.N. Jermoljuk, V.A. Verderevski, "Moderne Ausrüstung zur Herstellung elektrisch geschweißter Rohre ohne inneren Grat", Nr. 30, veröffentlicht 1981, Verlag ZNIITEltjazhmash, Moskau, Seite 30 bis 33), die eine Stange, die sich im elektrisch geschweißten, in Längsrichtung sich bewegenden Geradnahtrohr befindet und an einem unbeweglicher Widerlager befestigt ist, und ein mit der Stange verbundenes Gehäuse mit einem im Gehäuse angebrachten Meißel und einer federnden Einkerbvorrichtung für die Späne enthält. Das Gehäuse hat Stützrollen, die auf Achsen sitzen und mit der Innenfläche des elektrisch geschweißten Geradnahtrohrs in Kontakt stehen.

Die Symmetrieebene einer Stützrolle, die senkrecht zu ihrer Drehachse verläuft, fällt mit der Ebene zusammen, die durch die Schneide des Meißels und die gedachte Längsachse des Gehäuses verläuft. Die Drehachse dieser Stützrolle ist relativ zur gedachten Längsachse des Gehäuses in die zur Schneide des Meißels entgegengesetzte Seite hin versetzt und am Kolben eines im Gehäuse installierten Arbeitszylinders befestigt. Im Ergebnis einer solchen Befestigung der Stützrolle kann sich diese Rolle in dieser Ebene relativ zum Gehäuse bewegen zum Zwecke der Regulierung der Schnittiefe.

In der bekannten Vorrichtung zum Entfernen des inneren Grats in elektrisch geschweißten, ununterbrochen in Längsrichtung sich bewegenden Geradnahtrohren kommt es zu einer intensiven Erwärmung der unaufhörlich den inneren Grat abscherenden Schneide des Meißels. Das führt zum Anfritten des abgescherten Metalls des inneren Grats an der Schneide des Meißels und zu deren schnellem Abstumpfen und Auskolken, weshalb der Herstellungsprozeß des elektrisch geschweißten Geradnahtrohrs ohne inneren Grat zum Auswechseln des MeißelS unterbrochen wird.

Außerdem gewährleistet das Brechen der beim ununterbrochenen Entfernen des inneren Grats anfallenden Fließspäne mit Hilfe einer federnden Einkerbvorrichtung kein zuverlässiges Trennen der Späne in maßgerechte Abschnitte von geforderter Länge zum ungehinderten Entfernen derselben zusammen mit dem elektrisch geschweißten, kontinuierlich sich in Längsrichtung bewegenden Geradnahtrohr während des Schweißvorgangs des Rohrs. Das führt zu einem Verstopfen der Zwischenräume zwischen dem elektrisch geschweißten, sich in Längsrichtung bewegenden Geradnahtrohr und dem in gleicher Richtung unbeweglichen Meißelhalter durch die anfallenden Späne, wodurch große Reibungskräfte zwischen der Innenfläche des elektrisch geschweißten Schlitzrohrs und den steckengebliebenen Spänen entstehen, die als Ursache auftreten können für das Abbrechen des Meißelhalters und die Unterbrechung des Herstellungsprozesses elektrisch geschweißter Geradnahtrohre ohne inneren Grat. Zur Beseitigung der Ursachen für das Abbrechen des Meißelhalters wird die Rohrschweißanlage angehalten, und die Zwischenräume zwischen der Innenfläche des elektrisch geschweißten Geradnahtrohrs und dem Meißelhalter werden durch mit Hilfe von Schneidbrennern angelegte durchgehende Öffnungen im Rohr gereinigt. Das führt zu einer Zunahme der Metallfälle.

Es ist eine Vorrichtung zum Entfernen des inneren Grats in elektrisch geschweißten, sich in Längsrichtung bewegenden Geradnahtrohren bekannt (SU-Urheberschein Nr. 425691, Kl. B21C 37/06, veröffentlicht im Informationsblatt "Entdeckungen, Erfindungen, Geschmacksmuster, Warenzeichen", Nr. 16, 1974), die eine Stange, die sich im elektrisch geschweißten, in Längsrichtung sich bewegenden Geradnahtrohr befindet und an einem unbeweglichen Widerlager befestigt ist, und ein mit der Stange verbundenes Gehäuse eines Mehrmeißelwerkzeugs, von dem jeder Meißel in Form eines U-förmigen Glieds eines im Innern der Stange und am Umriß des Gehäuses angebrachten Kettenantriebs ausgebildet ist, enthält.

Das Gehäuse hat einen geradlinigen Abschnitt und zwei Stützrollen, die mit der Innenfläche des elektrisch geschweißten Geradnahtrohrs in Kontakt stehen. Die Stirnflächen dieser Rollen sind parallel und gleichweit von der Ebene entfernt, die durch die gedachte Längsachse des Gehäuses und die Meißelschneiden verläuft. Die Drehachse einer Stützrolle ist relativ zur gedachten Längsachse des Gehäuses in die Seite zu den Meißelschneiden hin versetzt und kann sich in dieser Ebene relativ zum Gehäuse zum Zwecke der Regulierung der Schnittiefe bewegen. Dabei wird der Kettenantrieb mit Hilfe eines speziellen, auf dem unbeweglichen Widerlager befindlichen Mechanismus bewegt.

In der bekannten Vorrichtung kommt es infolge der Anbringung der Meißelschneiden an der in Drehung versetzten endlosen Gallschen Kette zu einer periodischen Erwärmung der Meißelschneiden beim Kontakt mit dem inneren Grat bei dessen Entfernung und zur Abkühlung derselben auf dem Leerstrang der Kette, der auf der der Schweißnaht gegenüberliegenden Seite verläuft, nachdem sie einen Teil des inneren Grats abgeschert haben.

Solch eine Konstruktion der beschriebenen Vorrichtung zum Entfernen des inneren Grats gewährleistet dessen Entfernung aus den elektrisch geschweißten, ununterbrochen in Längsrichtung sich bewegenden Geradnahtrohren mit einer hohen Standzeit der Schneiden des Mehrmeißelwerkzeugs und den Anfall kurzer Abschnitte der Späne des abgescherten Grats, die sich leicht zusammen mit dem geschweißten Rohr entfernen lassen.

Die feinen, gebrochenen Späne haben jedoch die Meißel relativ zum Gehäuse an, sobald sie zwischen die die U-förmigen Meißel tragenden Kettenglieder und den geradlinigen Abschnitt des Gehäuses geraten. Dabei schneiden die sich auf der Gallschen Kette befindlichen Meißelschneiden tief in das Rohr ein, was zu einem sprunghaften Ansteigen der von der Kette aufgenommenen Schneidkraft und einer Verringerung der Wandstärke des Rohrs in der Zone der Schweißnaht infolge des teilweisen Abscherens der Wand durch die Meißel im Vergleich zur Stärke des Streifens, aus dem das Rohr hergestellt wird, führt. Solch ein Einschneiden der Meißel in das Rohr bewirkt eine Zunahme der Metallabfälle und führt außerdem infolge der durch das sprunghafte Anwachsen der Schneidkraft verursachten Kettenabrisse zu Stillstandszeiten der Rohrschweißanlage, die notwendig sind zum Herstellen von Öffnungen im Rohr mit Hilfe von Schneidbrennern zum Auswechseln der die U-förmigen Meißel tragenden gerissenen Kette.

Es ist eine Vorrichtung zum Entfernen des inneren Grats in elektrisch geschweißten, in Längsrichtung sich bewegenden Geradnahtrohren bekannt (DE-PS Nr. 924984, bekanntgemacht 1952, Kl. B21C 37/08), die eine Stange, die sich im elektrisch geschweißten, in Längsrichtung sich bewegenden Geradnahtrohr befindet und an einem unbeweglichen Widerlager befestigt ist, und ein mit der Stange verbundenes Gehäuse enthält, das ein Mehrmeißelwerkzeug trägt, das von einem Satz Meißel in Form von Scheiben gebildet wird, deren Durchmesser sich angefangen von der Seite, an der das Gehause an der Stange befestig igt, vergrößert, und das sich um seine durch die Mittelpunkte der Scheiben verlaufende Längsachse dreht. Das Mehrmeißelwerkzeug ist mit einem auf dem unbeweglichen Widerlager angebrachten Drehantrieb versehen. Sein Gehäuse hat Stützrollen, die auf Achsen sitzen und mit der Innenfläche dieses Rohrs in Kontakt stehen.

Die Verwendung von Scheiben als Meißel eines Mehrmeißelwerkzeugs, deren Durchmesser sich, angefangen von der Seite, an der das Gehäuse an der Stange befestigt ist, vergrößert, erleichtert erheblich die Funktion der Meißelschneiden beim ununterbrochenen Abscheren des inneren Grats des elektrisch geschweißten, kontinuierlich sich in Längsrichtung bewegenden Geradnahtrohrs, da die Einschnittiefe jedes Meißels nur einen gewissen Teil der vollen Höhe des Grats ausmacht, während die Drehung des Mehrmeißelwerkzeugs einen ständigen Wechsel der Abschnitte der Schneiden jedes Meißels, die den inneren Grat abscheren, gewahrleistet, wodurch ein wirksames Abkühlen der Meißelschneiden in der Ruhezeit, in der diese Abschnitte eine volle Umdrehung mitmachen und wieder an den inneren Grat herangeführt werden, erzielt wird. Derartige Arbeitsbedingungen für die Schneiden der scheibenförmigen Meißel ermöglichen die Herstellung elektrisch geschweißter Geradnahtrohre ohne inneren Grat in der technologischen Linie einer Rohrschweißanlage mit genügend hoher Leistung.

Solch ein rotierendes Mehrmeißelwerkzeug schert jedoch ununterbrochen den inneren Grat im elektrisch geschweißten, in Längsrichtung sich bewegenden Geradnahtrohr unter Bildung eines ununterbrochenen Fließspans ab. Dabei wird der Zwischenraum zwischen der Innenfläche des elektrisch geschweißten Geradnahtrohrs, dem Mehrmeißelwerkzeug und seinem Halter durch diese Späne verstopft. Das führt zur Entstehung großer Reibungskräfte zwischen der Innenfläche dieses Rohrs und den Spänen, die das Abbrechen des Meißelhalters und die Unterbrechung des Herstellungsprozesses elektrisch geschweißter Geradnahtrohre ohne inneren Grat verursachen können. Zur Beseitigung der Ursachen für das Abbrechen des Meißelhalters wird die Anlage angehalten, und die Zwischenräume zwischen der Innenfläche des elektrisch geschweißten Geradnahtrohrs, dem Mehrmeißelwerkzeug und seinem Halter werden durch mit Hilfe von Schneidbrennern angelegte durchgehende Öffnungen in diesem Rohr gereinigt. Das alles führt zu einer Minderung der Leistung der Rohrschweißanlage, wenn solch ein Verfahren zum Entfernen des inneren Grats in ihrer technologischen Linie eingesetzt wird. Außerdem werden die Abschnitte des elektrisch geschweißten Geradnahtrohrs mit den für die Entfernung der Späne angelegten Öffnungen von diesem Rohr abgeschnitten, was zu einer Zunahme der Metallabfälle führt.

Offenbarung der Erfindung

Der Erfindung liegt die Aufgabe zugrunde, ein Verfahren zum Entfernen des inneren Grats in elektrisch geschweißten Geradnahtrohren und Vorrichtungen für dessen Realisierung zu schaffen, die ein periodisches Abscheren des inneren Grats ermöglichen, das ein Brechen der Späne und deren ungehinderte Abführung zusammen mit dem elektrisch geschweißten, sich fortbewegenden Geradnahtrohr ohne Verminderung der Leistung der Rohrschweißanlage und ohne Zunahme der Metallabfälle gewährleistet.

Das Wesen der Erfindung besteht darin, daß in einem Verfahren zum Entfernen des inneren Grats in elektrisch geschweißten, in Längsrichtung sich bewegenden Geradnahtrohren, das darin besteht, daß die Meißelschneiden eines Mehrmeißelwerkzeugs hintereinander entlang der Mantellinie eines elektrisch geschweißten Geradnahtrohrs auf der mit einem Grat versehenen Schweißnaht in Stellung gebracht werden, mit diesen Schneiden die Innenfläche des elektrisch geschweißten Geradnahtrohrs entlang der Schweißnaht in der von der ersten und von der letzten Meißelschneide des Mehrmeißelwerkzeugs begrenzten Schneidzone bearbeitet wird, gemäß der Erfindung die Meißelschneiden des Mehrmeißelwerkzeugs hintereinander mit gleichem Abstand, der einer Schrittlänge entspricht, angeordnet und in gleicher Entfernung von der Mantellinie des elektrisch geschweißten Geradnahtrohrs angebracht werden, die Bearbeitung der Innenfläche entlang der Schweißnaht des elektrisch geschweißten Geradnahtrohrs in der Schneidzone periodisch vorgenommen wird, indem abwechselnd mal der innere Grat entfernt wird und mal die Meißelschneiden des Mehrmeißelwerkzeugs an die Innenfläche des elektrisch geschweißten Geradnahtrohrs herangeführt und von ihr weggeführt werden, wobei in jeder Bearbeitungsperiode der Innenfläche des elektrisch geschweißten Geradnahtrohrs entlang der Schweißnaht die Dauer des Entfernens des inneren Grats von der Schweißnaht der Zeitdauer entspricht, in der sich das elektrisch geschweißte Geradnahtrohr um eine Entfernung fortbewegt, die die Schrittlänge zwischen den benachbarten Meißelschneiden des Mehrmeißelwerkzeugs um einen Wert übersteigt, der sich in Grenzen von 2 bis 10 % dieser Schrittlänge bewegt, während die Gesamtdauer des Wegführens und des Herenführens der Meißelschneiden des Mehrmeißelwerkzeugs der Zeitdauer entspricht, in der sich das elektrisch geschweißte Geradnahtrohr um eine Entfernung fortbewegt, die kleiner als die Lange der Schneidzone um einen Wert ist, der sich in Grenzen von 2 bis 10% der Länge der Schneidzone bewegt.

Das Wesen der Erfindung besteht auch darin, daß in einer Vorrichtung zum Entfernen des inneren Grats in elektrisch geschweißten Geradnahtrohren, die eine Stange, die sich im elektrisch geschweißten Geradnahtrohr befindet und an einem unbeweglichen Widerlager befestigt ist, und ein Gehäuse eines Mehrmeißelwerkzeugs mit in ihm befestigten Meißeln, bei denen der Abstand zwischen der ersten und der letzten Meißelschneide der Länge der Schneidzone entspricht, enthält, das mechanisch mit der Stange verbunden und mit Stützrollen ausgerüstet ist, die auf Drehachsen sitzen und mit der Innenfläche des elektrisch geschweißten Geradnahtrohrs in Kontakt stehen, gemäß der Erfindung die Schneiden aller Meißel mit gleichem Abstand voneinander, der einer Schrittlänge entspricht, und in gleicher Höhe von der gedachten Längsachse des Gehäuses des Mehrmeißelwerkzeugs angeordnet sind. Eine Stützrolle befindet sich zwischen der Stange und dem Mehrmeißelwerkzeug und hat die Form eines Nockens. Die Drehachse dieser Stützrolle ist im Gehäuse des Mehrmeißelwerkzeugs befestigt, steht senkrecht zu einer senkrechten Ebene, die durch die Meißelschneiden und die gedachte Längsachse des Gehäuses des Mehrmeißelwerkzeugs verläuft, ist beweglich in dieser senkrechten Ebene installiert und der Mittelpunkt der Drehachse ist relativ zur gedachten längsachse des Gehäuses des Mehrmeißelwerkzeugs in die zu den Meißelschneiden des Mehrmeißelwerkzeugs entgegengesetzte Seite versetzt. Der Umfang der in Form eines Nockens ausgebildeten Stützrolle enthält zwei Abschnitte, von denen der erste einen Teil eines Kreises mit dem Radius R darstellt, dessen Mittelpunkt mit dem Mittelpunkt der Drehachse dieser Stützrolle zusammenfällt, eine Länge hat, die die Schrittlänge zwischen den benachbarten Meißeln um einen Wert übersteigt, der sich in Grenzen von 2 bis 10% dieser Schrittlange bewegt, und so angeordnet ist, daß der Mittelpunkt dieses Abschnitts mit der Exzenterlinie dieser Stützrolle zusammenfällt, und der zweite Abschnitt, der den Teil des Kreises des ersten Abschnitts fortsetzt, einen Teil eines Kreises darstellt, dessen Mittelpunkt entlang der Exzenterlinie vom Mittelpunkt der Drehachse der in Form eines Nockens ausgeführten Stützrolle um den Wert dieser Exzentrizität e in Richtung zum ersten Abschnitt hin versetzt, und der eine Länge hat, die kleiner ist als die Länge der Schneidzone um einen Wert, der sich in Grenzen von 2 bis 10% der Länge der Schneidzone bewegt.

Zwei andere Stützrollen sind im Gehäuse des Mehrmeißelwerkzeugs mit einer Verschiebung der Mittelpunkte ihrer Drehachsen von der gedachten Längsachse dieses Gehauses in Richtung zu den Meißelschneiden des Mehrmeißelwerkzeugs angebracht, wobei die eine dieser Rollen federnd und an dem von der Stange entfernten Ende des Gehauses des Mehrmeißelwerkzeugs befestigt ist, während die andere Stützrolle mit dem Radius der Außenfläche, der den Wert R-e beträgt, starr auf ihrer Drehachse zwischen der Stange und der in Form eines Nockens ausgebildeten Stützrolle installiert ist.

Die Aufgabe wird auch dadurch gelöst, daß eine Vorrichtung zum Entfernen des inneren Grats in elektrisch geschweißten Geradnahtrohren, die eine Stange, die sich im elektrisch geschweißten Geradnahtrohr befindet und an einem unbeweglichen Widerlager befestigt ist, und ein Gehäuse eines Mehrmeißelwerkzeugs mit in ihm befestigten Meißeln, bei denen der Abstand zwischen der ersten und der letzten Meißelschneide der Länge der Schneidzone entspricht, enthält, das mechanisch mit der Stange verbunden und mit Stützrollen ausgerüstet ist, die auf Drehachsen sitzen und mit der Innenflache des elektrisch geschweißten Geradnahtrohrs in Kontakt stehen, gemäß der Erfindung eine Hülse und eine Platte hat, die starr mit dem Gehäuse des Mehrmeißelwerkzeugs, von dem eine Stützrolle, die zwischen dem Mehrmeißelwerkzeug und dem Teil des Gehäuses mit der starr befestigten Platte angebracht ist, in Form eines Nockens ausgebildet ist, und mit der Hülse verbunden ist, die eine Stützrolle hat und starr mit der Stange verbunden ist, wobei die gedachten Längsachsen der Platte, des Gehäuses des Mehrmeißelwerkzeugs und der Hülse zusammenfallen. Die Drehachse der in Form eines Nockens ausgebildeten Stützrolle steht senkrecht zu einer senkrechten Ebene, die durch die Meißelschneiden und die gedachte Längsachse des Gehäuses des Mehrmeißelwerkzeugs verläuft, und der Mittelpunkt der Drehachse dieser Stützrolle ist relativ zur gedachten Längsachse des Gehäuses des Mehrmeißelwerkzeugs in die zu den Meißelschneiden entgegengesetzte Seite versetzt.

Die in Form eines Nockens ausgebildete Stützrolle hat auf ihrem Umfang zwei Abschnitte, von denen der erste einen Teil eines Kreises mit dem Radius R darstellt, dessen Mittelpunkt mit dem Mittelpunkt der Drehachse dieser Stützrolle zusammenfällt, eine Länge hat, die die Schrittlänge zwischen den benachbarten Meißeln des Mehrmeißelwerkzeugs um einen Wert übersteigt, der sich in Grenzen von 2 bis 10% dieser Schnittlänge bewegt, und so angeordnet ist, daß der Mittelpunkt dieses Abschnitts mit der Exzenterlinie dieser Stützrolle zusammenfällt, und der zweite Abschnitt, der den Teil des Kreises des ersten Abschnitts fortsetzt, einen Teil eines Kreises darstellt, dessen Mittelpunkt entlang der Exzenterlinie vom Mittelpunkt der Drehachse der in Form eines Nockens ausgebildeten Stützrolle um den Wert dieser Exzentrizität e in Richtung zum ersten Abschnitt hin versetzt ist, und der eine Länge hat, die kleiner ist als die Länge der Schneidzone um einen Wert, der sich in Grenzen von 2 bis 10 % der Länge der Schneidzone bewegt.

Eine andere Stützrolle des Gehäuses des Mehrmeißelwerkzeugs mit einem Radius der Außenfläche, der den Wert R-e annimmt, ist starr auf ihrer Drehachse befestigt mit einer Verschiebung des Mittelpunkts dieser Drehachse von der gedachten Längsachse dieses Gehäuse weg in Richtung zu den Meißelschneiden und befindet sich zwischen der in Form eines Nockens ausgebildeten Stützrolle und dem Teil des Gehäuses mit der starr befestigten Platte, wobei die Schneiden aller Meißel des Mehrmeißelwerkzeugs mit gleichem Abstand voneinander, der einer Schrittlänge entspricht, und in gleicher Höhe von der gedachten Längsachse des Gehäuses des Mehrmeißelwerkzeugs auf seinem letzten, vom Gehäuseteil mit der starr befestigten Platte entfernten Abschnitt angeordnet sind.

Der Mittelpunkt der Drehachse der Stützrolle, deren Radius der Außenfläche den Wert R annimmt, der Hülse ist relativ zum Mittelpunkt der Drehachse der in Form eines Nockens ausgebildeten Stützrolle in die zu den Meißelschneiden des Mehrmeißelwerkzeugs entgegengesetzte Seite um einen Wert versetzt, der der dreifachen Exzentrizität der in Form eines Nockens ausgebildeten Stützrolle gleicht.

Die Erfindung ermöglicht die Herstellung elektrisch geschweißter Geradnahtrohre ohne inneren Grat, die die teueren nahtlosen Rohre ersetzen können bei der Verwendung

- für Rohrtouren von Bohrlöchern
- für Hauptgasleitungen
- für Kardanwellen
- für Vorprofile für Bimetallrohre
- für Rohre mit innerer Beschichtung
- für Kesselrohre
- als Vorprofile für kaltgeformte Rohre

Kurze Beschreibung der Zeichnungen

Im folgenden wird die Erfindung anhand von konkreten Ausführungsbeispielen und durch die beiliegenden Zeichnungen, die die Möglichkeiten der Realisierung des erfindungsgemäßen Verfahrens bestätigen, erläutert, und zwar zeigt

Fig. 1 ein Mehrmeißelwerkzeug, das in einem elektrisch geschweißten Geradnahtrohr während des Entfernens des inneren Grats gemäß der Erfindung installiert ist;

Fig. 2 die Gesamtansicht einer erfindungsgemäßen Vorrichtung zum Entfernen des inneren Grats in elektrisch geschweißten Geradnahtrohren (für Rohre mit großem und mittleren Durchmesser);

Fig. 3 einen Schnitt durch die Ebene III-III in Fig.2, in vergrößertem Maßstab gemäß der Erfindung;

Fig. 4 die Befestigungsbaugruppe der Achse einer in Form eines Nockens ausgebildeten Stützrolle im Gehäuse des Mehrmeißelwerkzeugs mit Hilfe von Laschen, gemäß der Erfindung;

Fig. 5 die Befestigungsbaugruppe der Achse einer in Form eines Nockens ausgebildeten Stützrolle im Gehäuse des Mehrmeißelwerkzeug mit Hilfe einer Konsole, gemäß der Erfindung;

Fig. 6 die Gesamtansicht einer erfindungsgemäßen Vorrichtung zum Entfernen des inneren Grats in elektrisch geschweißten Geradnahtrohren (für Rohre mit kleinem Durchmesser).

Beste Durch- und Ausführungsvarianten der Erfindung

Das Wesen des erfindungsgemäßen Verfahrens zum Entfernen des inneren Grats in elektrisch geschweißten Geradnahtrohren besteht in folgendem.

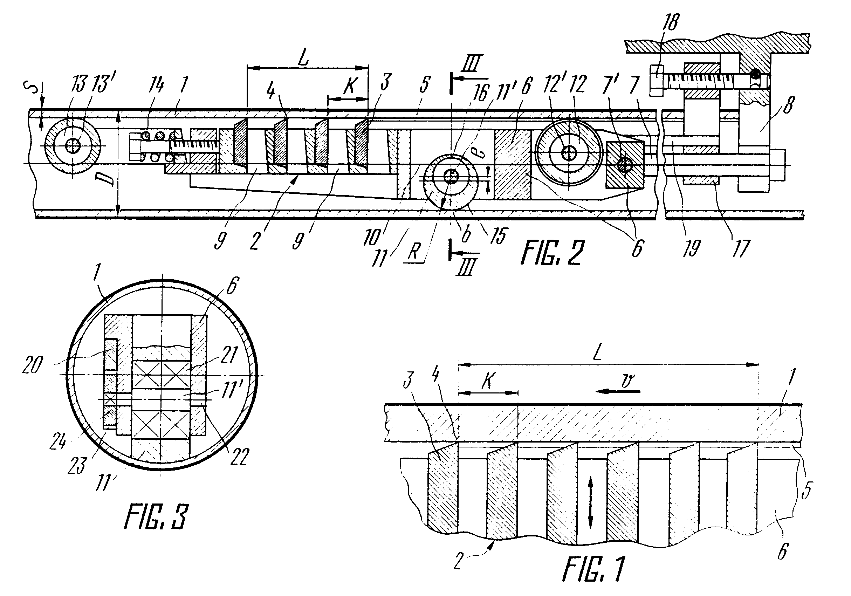

Im Innern eines elektrisch geschweißten Geradnahtrohrs 1 (Fig. 1) wird ein Mehrmeißelwerkzeug 2 mit Meißeln 3, von denen jeder eine Schneide 4 hat, in Stellung gebracht. Die Meißel 3 sind hintereinander mit gleichem Abstand K voneinander in der Schneidzone L angeordnet, die von der ersten und der letzten Schneide 4 der Meißel 3 des Mehrmeißelwerkzeugs 2 entlang der Schweißnaht mit einem Grat 5 begrenzt wird. Das Mehrmeißelwerkzeug 2 ist so im Gehäuse 6 befestigt, daß die Schneiden 4 in gleicher Entfernung von der Mantellinie des Rohrs 1 entlang der Schweißnaht mit dem Grat 5 angeordnet sind. Das Gehäuse 6 ist während des Entfernens des Grats 5 waagerecht aufgestellt und gelenkig mit dem Ständer eines Formwalzwerks (in der Fig. nicht abgebildet) verbunden, wodurch eine Bewegung des Gehäuses 6 mit dem Mehrmeißelwerkzeug 2 entlang der Mantellinie des elektrisch geschweißten Geradnahtrohrs 1 verhindert wird.

Die Bearbeitung der Innenfläche des elektrisch geschweißten Geradnahtrohrs 1 entlang der Schweißnaht mit dem Grat 5 in der Schneidzone L wird periodisch durchgeführt, indem abwechselnd mal der innere Grat 5 entfernt wird und mal die Schneiden 4 der Meißel 3 des Mehrmeißelwerkzeugs 2 an die Innenfläche des elektrisch geschweißten Geradnahtrohrs 1 entlang der Schweißnaht herangeführt und von ihr weggeführt werden.

Entsprechend der durch das Formen und Schweißen bedingten Längsbewegung des elektrisch geschweißten Geradnahtrohrs 1 werden die Schneiden 4 des Mehrmeißelwerkzeugs 2 zusammen mit dessen Gehäuse 6 an die Schweißnaht mit dem Grat 5 herangeführt. Da die Schneiden 4 des Mehrmeißelwerkzeugs 2 im Gehäuse 6 in gleicher Entfernung von der Mantellinie des Rohrs 1 befestigt sind, laufen sie alle gleichzeitig gegen den Grat 5 in der Schneidzone L an. Nach dem Anlaufen der Schneiden 4 gegen den Grat 5 auf dessen volle Höhe wird die Schweißnaht durch Abscheren des Grats 5 im Verlaufe eines Zeitintervalls bearbeitet, in dem sich das elektrisch geschweißte Geradnahtrohr 1 um eine Entfernung weiterbewegt, die die Schrittlange K zwischen den benachbarten Schneiden 4 der Meißel 3 des Mehrmeißelwerkzeugs 2 um einen Wert übersteigt, der sich in Grenzen von 2 bis 10 % der Schrittlänge K bewegt.

Wenn die Dauer des Abscherens des Grats 5 so festgelegt wird, daß das elektrisch geschweißte Geradhahtrohr 1 sich in dieser Zeit um eine Entfernung weiterbewegt, die größer ist als die Schrittlange K zwischen den Meißeln 3 um einen Wert, der kleiner ist als 2 % der Schrittlänge K, verbleiben im Innern des Rohrs 1 Abschnitte, auf denen der Grat 5 nicht abgeschert ist.

Wenn die Dauer des Abscherens des Grats 5 so festgelegt wird, daß das elektrisch geschweißte Geradnahtrohr 1 sich in dieser Zeit um eine Entfernung weiterbewegt, die die Schrittlänge K zwischen den Meißeln um einen Wert von mehr als 10 % übersteigt, führt das dazu, daß der erste Meißel 3 des Mehrmeißelwerkzeugs 2 überlastet ist und die anderen Meißel nicht ausgelastet sind. Das kann zu einer Verringerung der Standzeit des ersten Meißels 3 führen.

Danach entfernt man die Schneiden 4 des Mehrmeißelwerkzeugs 2 zusammen mit dem Gehäuse 6 vom Grat 5 aus der Schneidzone L. Dabei entspricht die Gesamtzeitdauer, beginnend vom Moment des Wegführens der Schneiden 4 des Mehrmeißelwerkzeugs 2 vom Grat 5 bis zum Moment des darauffolgenden Anlaufens der Schneiden 4 gegen den Grat 5 auf dessen volle Höhe beim nächsten Zuführen des Mehrmeißelwerkzeugs 2 zur Mantellinie des Rohrs 1 in der Schneidzone L, der Dauer der Weiterbewegung des aus der Rohrschweißanlage herauskommenden Rohrs 1 um eine Entfernung, die kleiner ist als die Schneidzone L um einen Wert, der sich in Grenzen von 2 bis 10% der Länge der Schneidzone L bewegt.

Wenn die Gesamtdauer des Zuführens und Wegführens der Schneiden 4 des Mehrmeißelwerkzeugs 2 an die zu bearbeitende Oberfläche des Rohrs 1 bzw. von ihr weg so festgelegt ist, daß der Unterschied zwischen der vom elektrisch geschweißten Geradnahtrohr 1 zurückgelegten Entfernung und der Länge der Schneidzone L mehr als 10 % der Länge der Schneidzone L beträgt, ist der letzte Meißel des Mehrmeißelwerkzeugs 2 nicht ausgelastet. Das hat eine unrationelle Verwendung des Werkstoffes der Meißel 3 zur Folge.

Wenn die Gesamtdauer des Zuführens und Wegführens der Schneiden 4 des Mehrmeißelwerkzeugs 2 an die zu bearbeitende Oberfläche bzw. von ihr weg so festgelegt ist, daß der Unterschied zwischen der vom elektrisch geschweißten Geradnahtrohr 1 zurückgelegten Entfernung und der Länge der Schneidzone L weniger als 2 % der Länge der Schneidzone L beträgt, verbleiben im Innern des elektrisch geschweißten Geradnahtrohrs 1 Abschnitte, auf denen der Grat 5 nicht abgeschert ist.

Danach wiederholen sich der oben beschriebene Vorgang des Abscherens des Grats 5 durch alle Schneiden 4 des Mehrmeißelwerkzeugs 2 in der Schneidzone L und das Wegführen der Schneiden 4 mit ihrem anschließenden Heranführen in die Schneidzone L.

Auf diese Weise wird der Grat 5 des elektrisch geschweißten Geradnahtrohrs 1 von den Schneiden 4 des Mehrmeißelwerkzeugs periodisch bearbeitet.

Durch die periodische Bearbeitung der Schweißnaht im Innern des elektrisch geschweißten Geradnahtrohrs 1 durch die Schneiden 4 der Meißel 3 des Mehrmeißelwerkzeugs 2 fallen auf den Abschnitten Späne des abgescherten Grats 5 mit einer Länge an, die mit der Schrittlähge K zwischen den Meißeln 3 vergleichbar ist. Solche Späne gelangen ungehindert auf die der Schweißnaht gegenüberliegende Innenfläche des elektrisch geschweißten Geradnahtrohrs 1 und werden bei dessen Längsbewegung zusammen mit ihm aus der Schneidzone L entfernt. Dadurch wird ein Verstopfen des Zwischenraums zwischen dem Rohr 1 und dem Gehäuse 6 des Mehrmeißelwerkzeugs durch Späne des Grats 5 verhindert, wodurch ein Stillstand der Rohrschweißanlage vermieden und eine Verringerung der Metallabfälle erzielt wird.

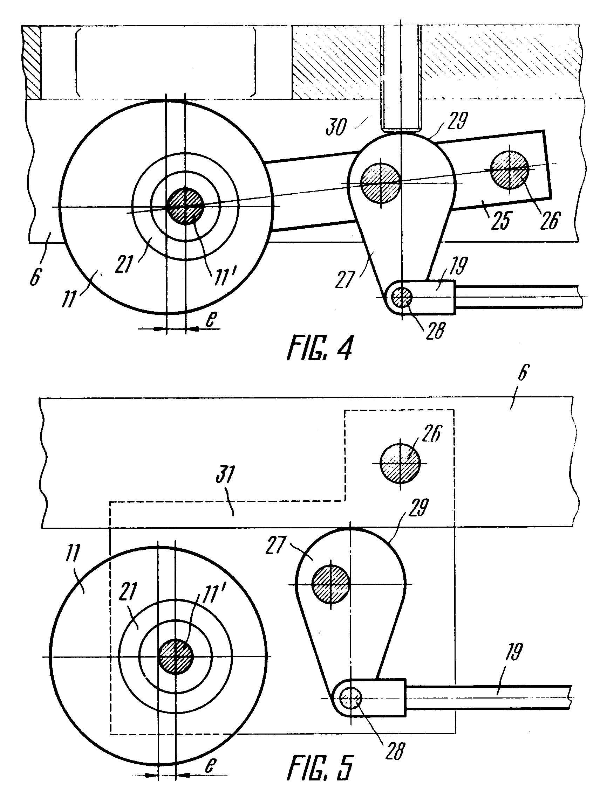

Die Vorrichtung zum Entfernen des inneren Grats in elektrisch geschweißten Geradnahtrohren 1 (Fig. 2) (für Rohre mit großem und mittlerem Durchmesser) enthält eine im elektrisch geschweißten Geradnahtrohr 1 angeordnete Stange 7, die mit dem Gehäuse 6 des Mehrmeißelwerkzeugs 2 mit Hilfe eines Stifts 7' verbunden und an einem unbeweglichen Widerlager 8 befestigt ist. Das Gehäuse 6 hat Ableitungskanäle 9 für die Späne. Auf einem Abschnitt des Gehäuses 6, dessen Länge der Länge der Schneidzone L entspricht, sind hintereinander mit gleichem Abstand voneinander, der der Schrittlänge K entspricht, die Meißel 3 angebracht, deren Schneiden 4 in gleicher Höhe von der gedachten Längsachse 10 des Gehäuses 6 angeordnet sind. Im Gehäuse 6 sind eine in Form eines Nockens ausgebildete Stützrolle 11 mit einer Drehachse 11', eine Stützrolle 12 mit einer Drehachse 12' und eine Stützrolle 13 mit einer Drehachse 13' installiert. Die Stützrolle 12 sitzt starr auf ihrer Drehachse 12' zwischen der Stange 7 und der in Form eines Nockens ausgebildeten Stützrolle 11, und der Mittelpunkt der Drehachse 12' der Stützrolle 12 ist von der gedachten Längsachse 10 des Gehäuses 6 in Richtung zu den Schneiden 4 der Meißel des Mehrmeißelwerkzeugs 2 versetzt.

Die Stützrolle 13 befindet sich an dem von der Stange 7 entfernten Ende des Gehäuses 6 und ist federnd mit Hilfe einer Feder 14 angebracht. Der Mittelpunkt der Drehachse 13' der Stützrolle 13 ist von der gedachten Längsachse 10 des Gehäuses 6 in Richtung zu den Schneiden 4 versetzt.

Die Stützrolle 11 befindet sich zwischen der Stange 7 und dem Mehrmeißelwerkzeug 2. Die Drehachse 11' der Stützrolle 11 steht senkrecht zu einer senkrechten Ebene, die durch die Schneiden 4 der Meißel 3 des Mehrmeißelwerkzeugs 2 und die gedachte Längsachse 10 des Gehäuses 6 verläuft, und kann sich in dieser senkrechten Ebene bewegen. Der Mittelpunkt der Drehachse 11' der Stützrolle 11 ist relativ zur gedachten Längsachse 10 des Gehäuses 6 in die zu den Schneiden 4 der Meißel 3 des Mehrmeißelwerkzeugs 2 entgegengesetzte Seite versetzt, damit diese Rolle mit der der Schweißnaht gegenüberliegenden Innenfläche des Rohrs 1 in Kontakt steht.

Die in Form eines Nockens ausgebildete Stützrolle 11 hat an ihrem Umfang zwei Abschnitte. Der Abschnitt 15 stellt einen Teil eines Kreises mit dem Radius R dar, dessen Mittelpunkt mit dem Mittelpunkt der Drehachse 11' der Stützrollen 11 zusammenfällt, und hat eine Länge, die die Schrittlänge K zwischen den benachbarten Meißeln 3 um einen Wert übersteigt, der sich in Grenzen von 2 bis 10 % der Schrittlänge K bewegt.

Wenn der Abschnitt 15 des Umfangs der in Form eines Nockens ausgebildeten Stützrolle 11 eine Länge hat, die die Schrittlänge K zwischen den Meißeln 3 um einen Wert von weniger als 2 % der Schrittlänge übersteigt, verbleiben im Innern des elektrisch geschweißten Geradnahtrohrs 1 Abschnitte, auf denen der Grat 5 nicht abgeschert ist. Wenn dieser Abschnitt 15 eine Länge hat, die die Schrittlänge K zwischen den Meißeln 3 um mehr als 10% übersteigt, führt das dazu, daß der erste Meißel 3 des Mehrmeißelwerkzeugs 2 überlastet ist und die folgenden Meißel 3 nicht ausgelastet sind. Das kann zu einer Senkung der Standzeit des ersten Meißels 3 führen.

Der Mittelpunkt b des Abschnitts 15 fällt mit der Exzenterlinie der Stützrolle 11 zusammen. Die Größe des Radius' R wird in Abhängigkeit vom Durchmesser des elektrisch geschweißten Geradnahtrohrs 1 und der Größe des Grats 5 festgelegt und läßt sich durch folgende Formel bestimmen:

$$R \leqslant \frac{D - 2S}{2} - e$$

worin:

D - Außendurchmesser des Rohrs, mm
S - Wanddicke des Rohrs, mm
e - Größe der Exzentrizität der Stützrolle 11 sind.

Der Abschnitt 16, der den Teilkreis des Abschnitts 15 fortsetzt, stellt einen Teil eines Kreises dar, dessen Mittelpunkt entlang der Exzenterlinie vom Mittelpunkt der Drehachse 11' der Stützrolle 11 um den Wert der Exzentrizität e in Richtung zum Abschnitt 15 versetzt ist. Der Abschnitt 16 hat eine Länge, die kleiner ist als die Länge der Schneidzone 1 um einen Wert, der sich in Grenzen von 2 bis 10 % der Länge der Schneidzone L bewegt. Die Abschnitte 15 und 16 bilden die Arbeitsfläche der Stützrolle 11.

Wenn der Abschnitt 16 des Umfangs der Arbeitsfläche der in Form eines Nockens ausgebildeten Stützrolle 11 eine Länge hat, die kleiner ist als die Länge der Schneidzonen L um einen Wert, der größer ist als 10 % der Länge der Schneidzone, ist der letzte Meißel 3 des Mehrmeißelwerkzeugs 2 nicht ausgelastet. Das hat eine unrationelle Verwendung des Werkstoffes der Meißel zur Folge. Wenn dieser Abschnitt eine Länge hat, die kleiner ist als die Länge der Schneidzone L um einen Wert, der kleiner ist als 2 % der Länge der Schneidzone L, verbleiben im Innern des elektrisch geschweißten Rohrs 1 Abschnitte, auf denen der Grat 5 nicht abgeschert ist. Um zu erreichen, daß die Arbeitsfläche der Stützrolle 12 mit der Innenfläche des Rohrs 1 nur in der Zone der Schweißnaht in Wechselwirkung tritt, legt man den Radius der Stützrolle 12 durch den Wert R-e fest.

Die Exzentrizitätsgröße e wird gleich der maximalen Höhe des Grates 5 gewählt.

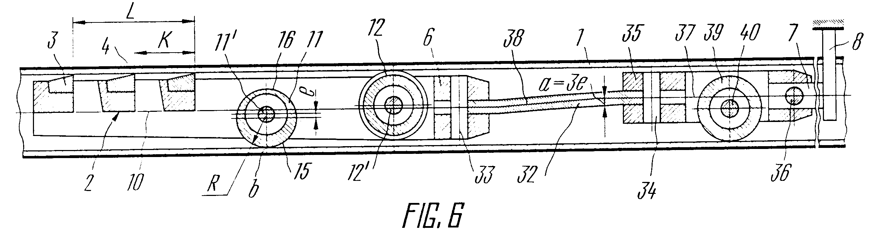

Zum Abscheren des inneren Grats in elektrisch geschweißten Geradnahtrohren in einem großen Bereich von Durchmessern sind verschiedene Konstruktionen der Befestigungsbaugruppe der Stützrolle 11 vorgesehen. Für geschweißte Geradnahtrohre von mittlerem Durchmesser (76 bis 127 mm) enthält die Befestigungsbaugruppe der Stützrolle 11 einen Gleitschuh 17, der mit Hilfe einer Schraube 18 Längsbewegungen ausführen kann. Die Zugstange 19 des Gleitschuhs 17 ist mit einer in einer Nut des Gehäuses 6 angebrachten Zahnstange 20 (Fig. 3) verbunden. Die Achse 11', auf der sich Lager 21 der Stützrolle 11 befinden, hat exzentrische Zapfen 22, 23, die frei im Gehäuse 6 befestigt sind. Auf dem exzentrischen Zapfen 23 ist ein Zahnrad 24 starr befestigt, das mit der Zahnstange 20 in Wechselwirkung steht.

Es ist auch eine andere Ausführung der Befestigungsbaugruppe der Stützrolle 11 möglich. In diesem Fall enthält das Gehäuse 6 (Fig. 4) zwei Schienen 25, deren Enden auf einer Seite mit Hilfe einer Achse 26 gelenkig im Gehäuse 6 befestigt sind, während zwischen den anderen Enden die Achse 11' der Stützrolle 11 befestigt ist. Auf der Achse 11' ist mit Hilfe der Lager 21 die Stützrolle 11 angebracht. Zwischen der Stützrolle 11 und der Achse 26 ist in den Schienen 25 ein Exzenter 27 frei angeordnet. Der Exzenter 27 ist mit Hilfe eines Stifts 28 gelenkig mit der Zugstange 19 verbunden. Mit seiner Oberfläche 29 steht der Exzenter 27 in Wechselwirkung mit einer Schraube 30 für die Grobregulierung der Schneidtiefe.

Zum Entfernen des inneren Grats in elektrisch geschweißten Geradnahtrohren mit großem Durchmesser (219 bis 426 mm) ist die Achse 11' (Fig. 5) der Stützrolle 11 mit Hilfe der Lager 21 in einer Konsole 31 angebracht, die mit Hilfe der Achse 26 im Gehäuse 6 befestigt ist. Der Exzenter 27 ist mit Hilfe des Stifts 28 mit der Zugstange 19 verbunden und steht durch seine Oberfläche 29 unmittelbar mit dem Gehäuse 6 in Wechselwirkung.

Für elektrisch geschweißte Geradnahtrohre mit kleinem Durchmesser (30 bis 50 mm) enthält die Vorrichtung zum Entfernen des inneren Grats im elektrisch geschweißten Geradnahtrohr 1 die Stange 7 (Fig. 6), die sich im elektrisch geschweißten Geradnahtrohr 1 befindet und am unbeweglichen Widerlager 8 befestigt ist, und das Gehäuse 6 eines Mehrmeißelwerkzeugs mit an ihm befestigten Meißeln 3, bei denen der Abstand zwischen der ersten und der letzten Schneide der Länge der Schneidzone L entspricht. Die Schneiden 4 aller Meißel 3 des Mehrmeißelwerkzeugs 2 sind mit gleichem Abstand voneinander, der der Schrittlänge K entspricht, und in gleicher Höhe von der gedachten Längsachse 10 des Gehäuses 6 angeordnet. Das Gehäuse 6 ist mit der Stange 7 mechanisch verbunden und hat eine Stützrolle 11, die auf der Drehachse 11' sitzt, und eine Stützrolle 12, die sich auf der Drehachse 12' befindet. Die Stützrollen 11, 12 stehen durch ihre Oberfläche mit der Innenfläche des elektrisch geschweißten Geradnahtrohrs 1 in Kontakt.

Die Vorrichtung zum Entfernen des inneren Grats in elektrisch geschweißten Geradnahtrohren enthält auch eine Platte 32, die mit Hilfe eines Stifts 33 starr im Gehäuse 6 und mit Hilfe eines Stifts 34 in einer Hülse 35 befestigt ist. Die Hülse 35 ist mit Hilfe eines Stifts 36 mit der Stange 7 starr verbunden. Die Schneiden 4 aller Meißel 3 des Mehrmeißelwerkzeugs 2 sind an dem der Stelle der starren Verbindung des Gehäuses 6 mit der Platte 32 entgegengesetzten Endabschnitt des Gehäuses 6 angeordnet. Die gedachte Längsachse 37 der Hülse 35, die gedachte Längsachse 38 der Platte 32 und die gedachte Längsachse 10 des Gehäuses 6 fallen zusammen.

Die in Form eines Nockens ausgebildete Stützrolle 11 befindet sich zwischen dem Mehrmeißelwerkzeug 2 und dem Teil des Gehäuses 6 mit der starr befestigten Platte 32. Die Drehachse 11' der Stützrolle 11 steht senkrecht auf einer senkrechten Ebene, die durch die Schneiden 4 der Meißel 3 des Mehrmeißelwerkzeugs 2 und die gedachte Längsachse 10 des Gehäuses 6 des Mehrmeißelwerkzeugs 2 verläuft. Der Mittelpunkt der Drehachse 11' ist relativ zur gedachten Längsachse 10 des Gehäuses 6 in die zu den Schneiden 4 der Meißel 3 entgegengesetzte Seite versetzt. Die Stützrolle 11 hat an ihrem Umfang zwei Abschnitte 15 und 16. Der Abschnitt 15 stellt einen Teil eines Kreises dar, dessen Mittelpunkt mit dem Mittelpunkt der Drehachse 11' dieser Stützrolle 11 zusammenfällt, hat eine Länge, die die Schrittlänge K zwischen den benachbarten Meißeln 3 des Mehrmeißelwerkzeugs 2 um einen Wert übersteigt, der sich in Grenzen von 2 bis 10 % der Schrittlänge K bewegt, und ist so angeordnet, daß der Mittelpunkt b des Abschnitts 15 mit der Exzenterlinie der in Form eines Nockens ausgebildeten Stützrolle 11 zusammenfällt.

Der Abschnitt 16, der den Teilkreis des Abschnitts 15 fortsetzt, stellt den Teil eines Kreises dar, dessen Mittelpunkt entlang der Exzenterlinie vom Mittelpunkt der Drehachse 11' der Stützrolle 11 um den Wert der Exzentrizität e in Richtung zum Abschnitt 15 versetzt ist, und hat eine Länge die kleiner ist als die Länge der Schneidzone L um einen Wert, der sich in Grenzen von 2 bis 10 % der Länge der Schneidzone bewegt.

Die Stützrolle 12 ist auf ihrer Drehachse 12' starr befestigt mit einer Verschiebung des Mittelpunkts dieser Drehachse 12' von der gedachten Längsachse 10 des Gehäuses 6 in Richtung zu den Schneiden 4 der Meißel 3 und befindet sich zwischen der Stützrolle 11 und dem Teil des Gehäuses mit der starr befestigten Platte 32. Solch eine Verschiebung des Mittelpunkts der Achse 12' der Stützrolle 12 ist notwendig für die Gewährleistung eines Kontakts dieser Rolle 12 mit der Innenfläche des Rohrs 1 in der Zone der Schweißnaht.

Die Hülse 35 hat eine Stützrolle 39 mit einer Drehachse 40. Der Mittelpunkt der Drehachse 40 der Stützrolle 39 ist relativ zum Mittelpunkt der Drehachse 11' der Stützrolle 11 in die zu den Schneiden 4 der Meißel 3 des Mehrmeißelwerkzeugs 2 entgegengesetzte Seite um den Wert der dreifachen Exzentrizität der in Form eines Nockens ausgebildeten Stützrolle 11 versetzt.

Bei einer Verschiebung des Mittelpunkts der Drehachse 40 der Stützrolle 39 der Hülse 35 relativ zum Mittelpunkt der Drehachse 11' der Stützrolle 11 in die zu den Schneiden 4 der Meißel 3 entgegengesetzte Seite um einen kleineren Wert als die dreifache Exzentrizität ($a < 3\ e$) kann es im Moment der Kontaktaufnahme der Arbeitsfläche des Abschnitts 16 mit dem minimalen Radius der Stützrolle 11 mit der Innenfläche des elektrisch geschweißten Geradnahtrohrs 1 zu einem Rutschen der Stützrolle 11 infolge des Verlustes des Kontakts mit dem Rohr 1 und zur Herausbildung von Abschnitten auf der Innenfläche des Rohrs 1 kommen, auf denen der Grat 5 nicht abgeschert ist. Bei einem größeren Wert dieser Verschiebung ($a > 3\ e$) entstehen in der Platte 32 erhebliche zyklische Spannungen, die durch deren periodische elastische Biegung hervorgerufen werden. Diese zyklische Spannungen führen zum Ermüdungsbruch derselben und folglich zu einer Verringerung der Leistung der Vorrichtung.

Wenn mit Hilfe der Vorrichtung der innere Grat in elektrisch geschweißten Geradnahtrohren mit mittlerem und großem Durchmesser entfernt wird, funktioniert die Vorrichtung folgendermaßen.

Bei der Bewegung des elektrisch geschweißten Geradnahtrohrs 1 (Fig. 2) steht die Stützrolle 11 durch ihre Arbeitsfläche ununterbrochen mit der der Schweißnaht gegenüberliegenden Innenfläche des Rohrs 1 in Kontakt, während die zwei anderen Stützrollen 12 und 13 mit Abschnitten der Innenfläche des Rohrs 1 in der Zone der Schweißnaht kontaktieren.

Dieser Kontakt der Stützrollen 11, 12 und 13 mit der Innenfläche des Rohrs 1 wird durch die Rolle 13 erzeugt, die im Gehäuse 6 mit Hilfe der Feder 14 befestigt ist. Die Feder 14 drückt die Stützrolle 13 an die Innenfläche des Rohrs in der Zone der Schweißnaht mit der geforderten Kraft an. Durch diese Kraft wird das Gehäuse 6 des Mehrmeißelwerkzeugs 2 über die Achse $13^1$ der Stützrollen 13 von der Schweißnaht weggedrückt und die Stützrolle 11 über die im Gehäuse 6 befestigte Achse $11^1$ an die der Schweißnaht gegenüberliegende Innenfläche des Rohrs 1 angedrückt. Danach dreht sich das Gehäuse 6 unter Einwirkung der gleichen, von der Feder 14 erzeugten Kraft um die Achse $11^1$ (entgegen dem Uhrzeigersinn, entsprechend Fig. 2), wodurch die im Gehäuse 6 befestigte Achse $12^1$ die Stützrolle 12 an die Innenfläche des Rohrs 1 in der Zone der Schweißnaht andrückt.

Das sich bei dem in Längsrichtung unbeweglichen, mit der Stange 7, die am unbeweglichen Widerlager 8 befestigt ist, verbundenen Gehäuse 6 bewegende Rohr 1 zwingt die Stützrollen 11, 12 und 13 zu einer Drehbewegung. Da die Stützrolle 11 in Form eines Nockens ausgebildet ist, ändert sich ununterbrochen die Entfernung von ihrer Drehachse $11^1$ bis zu dem Punkt, in dem ihre Arbeitsfläche mit der Innenfläche des sich während des Schweißens bewegenden Rohrs 1 in Wechselwirkung steht auf dem Abschnitt 16 des Umfangs der Stützrolle 11 mit einer Länge, die sich in Grenzen von 2 bis 10 % der Länge der Schneidzone L bewegt, sie nimmt z.B. zu.

Die Achse $11^1$ kann unmittelbar im Gehäuse 6 oder in ihm mit Hilfe von Schienen 25 (Fig. 4) oder mit Hilfe einer Konsole 31 (Fig. 5) befestigt werden. Die Schienen 25 (Fig. 4) bzw. die Konsole 31 (Fig. 5) sind im Gehäuse 6 mit Hilfe der Achse 26 angebracht. Auf den Schienen 25 ist ein Exzenter 27 installiert, der sich mit seiner Arbeitsfläche 29 über die Schraube 30 auf das Gehäuse 6 aufstützt. Auf der Konsole 31 ist ebenfalls ein Exzenter 27 installiert, der sich mit seiner Arbeitsfläche 29 unmittelbar auf das Gehäuse 6 aufstützt. Infolge einer solchen Befestigung der Achse $11^1$ der Stützrolle 11 kann sich das Gehäuse 6 in einer senkrechten Ebene bewegen, wobei es sich um den Kontaktpunkt der Stützrolle 12 mit der Innenfläche des Rohrs 1 dreht und sich so der Schweißnaht nähert. Die Meißel 3 (Fig. 2), die auf einem Abschnitt des Gehäuses 6 mit einer Länge, die der Länge der Schneidzone L gleicht, und deren Schneiden 2 in gleicher Höhe von der gedachten Längsachse 10 des Gehäuses 6 und mit gleichem Schrittabstand K voneinander angeordnet sind, schneiden sich allmählich mit dem Annähern an die Schweißnaht dank der weiteren Drehung der Stützrolle 11 in den Grat 5 in der Schweißzone L ein.

Sobald der Abschnitt 15 des Umfangs der Rolle 11 bei seiner weiteren Drehung in Kontakt mit der Innenfläche des elektrisch geschweißten längsbewegten Rohrs 1 kommt, dringen alle Meißel 3 in den Grat 5 auf dessen volle Höhe ein. In diesem Augenblick beginnt der eigentliche Vorgang des Entfernens des inneren Grats 5.

Die Stützrolle 11 dreht sich weiter. Da jedoch die Entfernung von ihrer im Gehäuse 6 befestigten Drehachse $11^1$ bis zum Kontaktpunkt der Arbeitsfläche der Stützrolle 11 mit der Innenfläche des Rohrs 1 unverändert bleibt und dem Wert R gleicht, sind das Gehause 6 und folglich auch die Schneiden 4 der Meißel 3 in senkrechter Ebene unbeweglich. Solch eine Stellung des Gehäuses 6 und der Meißel 3 bleibt bis zu dem Augenblick erhalten, in dem der letzte Punkt des Abschnitts 15 des Umfangs der Stützrolle 11 in Kontakt mit der Innenfläche des Rohrs 1 tritt.

Sobald sich der Kontakt zwischen der Innenfläche des Rohrs 1 und dem letzten Punkt des Abschnitts 15 des Umfangs der Stützrolle 11 löst, hört das Abscheren des Grats 5 auf. Das Rohr 1 bewegt sich in diesem Zeitabschnitt in Längsrichtung um eine Entfernung weiter, die die Schnittlänge K zwischen den benachbarten Schneiden 4 der Meißel 3 um einen Wert übersteigt, der sich in Grenzen von 2 bis 10 % der Schrittlänge K bewegt, und der Grat 5 wird von der Innenfläche des Rohrs 1 in der Zone der Schweißnaht auf einem Abschnitt entfernt, dessen Länge der Summe der Schneidzone L und der Schrittlänge K gleicht.

Bei weiterer Drehung der Stützrolle 11 verringert sich zuerst und vergrößert sich dann die Entfernung vom Mittelpunkt ihrer Drehachse $11^1$ bis zum Punkt, in dem ihre Arbeitsfläche mit der Innenfläche des sich während des Schweißens bewegenden Rohrs 1 auf dem Abschnitt 16 ihres Umfangs in Wechselwirkung steht. Durch den Umstand, daß die Achse $11^1$ der Stützrolle 11 im Gehäuse 6 entweder unmittelbar oder mit Hilfe der Schienen 25 (Fig. 4) oder mit Hilfe der Konsole 31 (Fig. 5) befestigt ist, beginnt das Gehäuse 6 (Fig. 2) sich in senkrechter Ebene zu bewegen, indem es sich um den Kontaktpunkt der Stützrolle 12 mit der Innenfläche des Rohrs 1 dreht und sich dadurch zuerst vom Grat 5 entfernt und dann sich ihm wieder nähert. In diesem Zeitabschnitt bewegt sich das zu schweißende Rohr um eine Entfernung weiter, die kleiner ist als die Länge der Schneidzone L um einen Wert, der sich in Grenzen von 2 bis 10 % der Länge der Schneidzone L bewegt. Die Schneiden 4 der Meißel 3 stehen in dieser Zeit nicht mit dem Grat 5 in Kontakt. Sobald diese Periode des Wegführens der Meißel 3 vom Grat 5 beginnt, hört das Abscheren des Grats 5 auf. Die Länge der abgescherten Späne ist mit der Schrittlänge K zwischen den Meißeln 3 vergleichbar. Die Späne fallen ungehindert in die Ableitkanäle 9 des Gehäuses 6 und weiter ins Innere des zu schweißenden Rohrs 1, mit dem sie automatisch zusammen entfernt werden und so die Kanäle 9 im Gehäuse 6 für die folgende Portion des abgescherten Grats 5 freimachen.

Mit dem Beginn der Kontaktaufnahme des Arbeitsabschnitts 15 des Umfangs der Stützrolle 11 mit der Innenfläche des zu schweißenden Rohrs wiederholt sich der oben beschriebene Vorgang des Abscherens des Grats 5.

Auf diese Weise wird die Schweißnaht periodisch bearbeitet infolge des Vorhandenseins von zwei Abschnitten 15, 16 auf dem Umfang der Stützrolle 11, die ihre Arbeitsfläche darstellen, durch die Befestigung dieser Rolle im Gehäuse 6 und durch deren durch die Reibungskräfte zwischen ihrer Arbeitsfläche und dem längsbewegten Rohr 1 erzeugte Drehung. Dadurch ist die Länge der Späne des abgescherten Grats 5 vergleichbar mit der Schrittlänge K zwischen den Meißeln 3, so daß die Späne ungehindert ins Innere des längsbewegten Rohrs 1 fallen und zusammen mit ihm automatisch aus der Schneidzone L entfernt werden. Dadurch werden Stillstände der Rohrschweißanlage bei der Herstellung von Rohren ohne inneren Grat ausgeschlossen.

Wenn die Einschnittiefe der Schneiden 4 der Meißel 3 in den Grat 5 korrigiert werden muß, z.B., wenn die Einschnittiefe vergrößert werden muß, wird folgendermaßen verfahren. Beim Schweißen des geformten Rohrs 1 bewegt man den Gleitschuh 17 in Längsrichtung durch Drehen der Schraube 18 (Fig. 2) und folglich auch die Zugstange 19 mit der Zahnstange 20 (Fig. 3).

Da die exzentrischen Zapfen 22 und 23 der Achse 11$^1$ im Gehäuse 6 frei befestigt sind, drehen sie sich und drehen die mit ihnen zusammen ausgeführte Achse 11$^1$. Das Vorhandensein exzentrischer Zapfen 22 und 23 an der Achse 11$^1$ gewährleistet bei der Möglichkeit ihrer Drehung eine Bewegung des Mittelpunkts der Drehachse 11$^1$ der Stützrolle 11 in einer senkrechten Ebene, die durch die gedachte Längsachse 10 des Gehäuses 6 verläuft, wodurch im hier betrachteten Fall eine Bewegung der Stützrolle 11 in die zu den Schneiden 4 entgegengesetzte Richtung und ein tieferes Einschneiden der Meißel 3 in den abzuscherenden Grat 5 gewährleistet wird.

Auf diese Weise erreicht man durch das periodische Zuführen und Wegführen der Schneiden 4 (Fig. 2) der Meißel 3 zum Grat 5 bzw. von ihm weg, das durch die Anwendung einer in Form eines Nockens ausgebildeten und im Gehäuse 6 befestigten Stützrolle 11 bewirkt wird, die auf ihrem Umfang zwei Abschnitte hat, deren Länge mit der Schrittlänge K zwischen den Meißeln 3 und der Länge der Schneidzone L in Verbindung steht, daß gebrochene Späne mit einer Länge anfallen, die mit der Schrittlänge K zwischen den Meißeln 3 vergleichbar ist. Solche Späne werden ungehindert aus der Arbeitszone vom ununterbrochen bewegten, elektrisch geschweißten Geradnahtrohr 1 weggetragen, wodurch ein Verstopfen des Zwischenraums zwischen dem Rohr I und dem Gehäuse 6 mit Spänen verhindert wird und Stillstandszeiten der Rohrschweißanlage bei der Herstellung von Rohren ohne inneren Grat vermieden werden.

Wenn die erfindungsgemäße Vorrichtung zum Entfernen des inneren Grats in elektrisch geschweißten Geradnahtrohren mit kleinem Durchmesser verwendet wird, funktioniert sie folgendermaßen.

Während der Bewegung des elektrisch geschweißten Geradnahtrohrs 1 (Fig. 6) steht die Stützrolle 12 ununterbrochen durch ihre Arbeitsfläche mit der Innenfläche des elektrisch geschweißten Geradnahtrohrs 1 in der Zone der Schweißnaht in Kontakt und die zwei anderen Stützrollen 11 und 39 mit der Innenfläche des Rohrs 1 auf der Schweißnaht gegenüberliegenden Seite. Solch ein ununterbrochener Kontakt der Stützrollen 11, 12 und 39 mit der Innenfläche des Rohrs 1 wird durch die Verbindung des Gehäuses 6 des Mehrmeißelwerkzeugs über die Platte 32 mit der Hülse 35 gewährleistet bei gleichzeitiger Verschiebung des Mittelpunkts der Drehachse 40 der Stützrolle 39 von der Längsachse 37 der Hülse 35 weg. Die Verschiebung des Mittelpunkts der Drehachse 40 der Stützrolle 39 von der gedachten Achse 37 der Hülse 35 weg ist größer als die Verschiebung des Mittelpunkts der Drehachse 11$^1$ der Stützrolle 11 von der gedachten Längsachse 10 des Gehäuses 6 um den Wert $a = 3e$.

Da die Rollen 11 und 39 fit der Innenfläche das Rohrs 1 in Kontakt stehen, biegt sich die elastische Platte 32 in Richtung zu den Schneiden 4 der Meißel 3 durch. Durch die Biegung der Platte 32 entsteht am Ende das Gehäuses 6, wo sie mit Hilfe des Stifts 33 befestigt ist, eine senkrecht nach oben gerichtete Kraft, die die Stützrolle 12 fest an die Innenfläche des Rohrs 1 in der Zone der Schweißnaht andrückt. Dadurch dreht sich das Gehäuse 6 des Mehrmeißelwerkzeugs um die Drehachse 12$^1$ dieser Rolle 12, wodurch ein Kontakt der Arbeitsfläche der Stützrolle 11 mit der der Schweißnaht gegenüberliegenden Innenfläche des Rohrs 1 hergestellt wird. Das sich bewegende Rohr 1 zwingt diese Stützrollen 11 und 12 zur Ausführung einer Drehbewegung bei in Längsrichtung unbeweglichem Gehäuse 6 und unbeweglicher Hülse 35, die miteinander durch die Platte 32 verbunden und mit Hilfe eines Stifts 36 an der am unbeweglichen Widerlager 8 befestigten Stange 7 befestigt sind.

Da die Stützrolle 11 in Form eines Nockens ausgebildet ist, verandert sich ununterbrochen die Entfernung vom Mittelpunkt ihrer Drehachse 11$^1$ bis zu dem Punkt, in dem ihre Arbeitsfläche des Abschnitts 16 mit der Innenfläche des Rohrs 1 in Wechselwirkung steht, z.B. vergrößert sie sich. Da die Achse $11^1$ der Stützrolle 11 im Gehäuse 6 befestigt ist, beginnt das Gehäuse 6 in einer senkrechten Ebene eine Bewegung auszuführen, indem es sich um den Berührungspunkt der Stützrolle 12 mit der Innenfläche des Rohrs 1 dreht und sich dadurch der Schweißnaht nähert. Die auf einem Abschnitt des Gehäuses 6 mit einer Länge, die der Länge der Schneidzone L gleicht, angeordneten Meißel 3, deren Schneiden 4 sich in gleicher Höhe von der gedachten Längsachse 10 des Gehäuses 6 befinden und die mit gleichem Abstand voneinander angebracht sind, schneiden sich allmählich bei ihrer Annäherung an die Schweißnaht durch die weitere Drehung der Stützrolle 11 in den Grat 5 in der Schneidzone L ein.

Sobald der Abschnitt 15 des Umfangs der Stützrolle 11 mit einer Länge, die die Schrittlänge K zwischen den benachbarten Meißeln 3 um einen Wert übersteigt, der sich in Grenzen von 2 bis 10% der Schrittlänge K bewegt, bei seiner weiteren Drehung in Berührung mit der der Schweißnaht gegenüberliegenden Innenfläche des Rohrs 1 kommt, schneiden sich alle Meißel 3 in den Grat 5 auf dessen volle Höhe ein. Von diesem Augenblick an beginnt der eigentliche Vorgang des Entfernens des inneren Grats 5. Die Stützrolle 11 dreht sich weiter, da aber die Entfernung vom Mittelpunkt der im Gehäuse 6 befestigten Drehachse $11^1$ bis zum Berührungspunkt der Arbeitsfläche der Stützrolle 11 mit der der Schweißnaht gegenüberliegenden Innenfläche des Rohrs 1 unverändert bleibt und dem Wert R gleicht, sind das Gehäuse 6 und folglich auch die Schneiden 4 der Meißel 3 unbeweglich.

Solch eine Stellung des Gehäuses 6 und der Meißel 3 bleibt bis zu dem Augenblick erhalten, in dem der letzte Punkt des Abschnitts 15 des Umfangs der Stützrolle 11 in Kontakt mit der der Schweißnaht gegenüberliegenden Innenfläche des Rohrs 1 tritt. Sobald sich der Kontakt zwischen dem Rohr 1 und dem letzten Punkt des Abschnitts 15 des Umfangs der Stützrolle 11 löst, hört das Abscheren des Grats 5 auf.

Das Rohr 1 bewegt sich in diesem Zeitabschnitt in Längsrichtung um eine Entfernung weiter, die die Schrittlänge K zwischen den benachbarten Meißeln um einen Wert übersteigt, der sich in Grenzen von 2 bis 10 % der Schrittlänge K bewegt, und der Grat 5 wird von der Innenfläche das Rohrs 1 auf einem Abschnitt entfernt, dessen Länge der Summe der Länge der Schneidzone L und der Schrittlänge K zwischen den Meißeln gleicht.

Dabei ist die Länge der frei ins Innere des Rohrs 1 fallenden Abschnitte der Späne des abgescherten Grats 5 vergleichbar mit der Schrittlänge K zwischen den Meißeln 3.

Da das Ende des Gehäuses 6, an dem die Meißel 3 angebracht sind, frei ist von irgendwelchen Vorrichtungen und Bauteilen z.B. für das Andrücken dar Stützrolle 11 an das Rohr, ist der Zwischenraum zwischen der Innenfläche des Rohrs 1 und dem Gehäuse 6 ausreichend für einen ungehinderten Durchgang der Abschnitte der Späne, die im unteren Teil der Innenfläche des Rohrs 1 liegen, wenn sie vom Rohr 1 weitertransportiert werden. Dadurch wird das Entfernen der Späne aus der Schneidzone L in der Pause beim Abscheren des Grats 5 gewährleistet, was besonders wichtig ist bei Rohren mit kleinem Durchmesser (30 bis 50 mm).

Bei weiterer Drehung der Stützrolle 11 verringert sich die Entfernung von ihrer Drehachse $11^1$ bis zum Punkt, in dem ihre Arbeitsfläche mit der Innenfläche des sich fortbewegender Rohrs 1 auf dem Abschnitt 16 ihres Umfangs in Wechselwirkung tritt, und nimmt dann wieder zu. Die Achse $11^1$ der Stützrolle 11 ist im Gehäuse 6 befestigt, weshalb das Gehäuse 6 in einer senkrechten Ebene eine Bewegung auszuführen beginnt, indem es sich um den Punkt dreht, in dem die Stützrolle 12 mit der Innenfläche des Rohrs 1 in Kontakt steht und sich dadurch zuerst vom Grat 5 entfernt und sich dann ihm wieder nähert. In dieser Zeitabschnitt bewegt sich das Rohr 1 um eine Entfernung weiter, die kleiner ist als die Länge der Schneidzone L um einen Wert, der sich in Grenzen von 2 bis 10 % der Länge der Schneidzone L bewegt. Die Schneiden 4 der Meißel 3 stehen in dieser Zeit nicht mit dem Grat 5 in Kontakt.

Mit dem Beginn der Kontaktaufnahme des Arbeitsabschnitts 15 des Umfangs der Stützrolle 11 mit der dem Grat 5 gegenüberliegenden Innenfläche des Rohrs 1 wiederholt sich der oben beschriebene Vorgang des Entfernens des Grats 5.

Da das Ende des Gehäuses 6 des Mehrmeißelwerkzeugs zum Entfernen des inneren Grats aus Rohren mit kleinem Durchmesser (30 bis 50 mm) frei ist von Vorrichtungen und Bauteilen z.B. für das Andrücken der Stützrolle 11 an die Innenfläche des Rohrs 1, können die gebrochenen Späne ungehindert durch einen genügend großen Zwischenraum zwischen dem Rohr 1 und dem Gehäuse 6 hindurchtreten. Sie liegen dann, wenn sie vom Rohr 1 weiter transportiert werden, in dessen unterem Teil.

Die Anwendung der oben beschriebenen Vorrichtung zum Entfernen des inneren Grats in Rohren mit kleinem Durchmesser (30 bis 50 mm) gewährleistet neben dem Anfall gebrochener Späne einen ausreichend großen Raum für eine ungehinderte Entfernung der Späne aus der Schneidzone, wodurch eine Erhöhung der Produktivität des Herstellungsprozesses elektrisch geschweißter Geradnahtrohre und eine Verringerung der Metallabfälle erzielt wird, die durch erzwungende Stillstandszeiten der Rohrschweißanlage für das Einschneiden von Öffnungen im Rohr 1, das Reinigen der Meißel 3 und der Kanale 9 für das Ableiten der Späne verursacht werden, wenn der innere Grat bei Verwendung einer beliebigen anderen Vorrichtung entfernt wird.

Die Verwendung des oben beschriebenen Verfahrens und der oben beschriebenen Vorrichtungen zum Entfernen des inneren Grats 5 in elektrisch geschweißten Geradnahtrohren 1 gewährleistet eine Erhöhung der Produktivität des Herstellungsprozesses und eine Verringerung der Metallabfälle.

Industrielle Anwendbarkeit

Das erfindungsgemäße Verfahren und die erfindungsgemäßen Vorrichtungen zum Entfernen des inneren Grats in elektrisch geschweißten Geradnahtrohren können bei der Herstellung von Rohren in der technologischen Linie von Rohrschweißanlagen in Rohrherstellungsbetrieben verwendet werden.

**Patentansprüche**

1. Verfahren zum Entfernen des inneren Grats in elektrisch geschweißten, längsbewegten Geradnahtrohren, das darin besteht, daß die Meißelschneiden (4) eines Mehrmeißelwerkzeugs (2) hintereinander entlang der Mantellinie eines elektrisch geschweißten Geradnahtrohrs (1) auf der mit einem Grat (5) versehenen Schweißnaht in Stellung gebracht werden, mit diesen Schneiden (4) die Innenfläche des elektrisch geschweißten Geradnahtrohrs (1) entlang der Schweißnaht in der von der ersten und von der letzten Meißelschneide (4) des Mehrmeißelwerkzeugs (2) begrenzten Schneidzone (L) bearbeitet wird, dadurch gekennzeichnet, daß die Schneiden (4) der Meißel (3) des Mehrmeißelwerkzeugs (2) hintereinander mit gleichem Abstand, der einer Schrittlänge (K) entspricht, angeordnet und in gleicher Entfernung von der Mantellinie des elektrisch geschweißten Geradnahtrohrs (1) angebracht werden, die Bearbeitung der Innenfläche entlang der Schweißnaht des elektrisch geschweißten Geradnahtrohrs (1) in der Schneidzone (L) periodisch vorgenommen wird, indem abwechselnd mal der innere Grat (5) entfernt wird und mal die Schneiden (4) der Meißel (3) des Mehrmeißelwerkzeugs (2) an die zu bearbeitende Innenfläche des elektrisch geschweißten Geradnahtrohrs (1) entlang der Schweißnaht herangeführt und von ihr weggeführt werden, wobei in jeder Bearbeitungsperiode der Innenfläche des elektrisch geschweißten Geradnahtrohs (1) entlang der Schweißnaht die Dauer des Entfernens des inneren Grats (5) von der Schweißnaht der Zeitdauer entspricht, in der sich das elektrisch geschweißte Geradnahtrohr (1) um eine Entfernung fortbewegt, die die Schrittlänge (K) zwischen den benachbarten Schneiden (4) der Meißel (3) des Mehrmeißelwerkzeugs (2) um einen Wert übersteigt, der sich in Grenzen von 2 bis 10 % dieser Schrittlänge (K) bewegt, während die Gesamtdauer des Wegführens und des Heranführens der Schneiden (4) der Meißel (3) des Mehrmeißelwerkzeugs (2) der Zeitdauer entspricht, in der sich das elektrisch geschweißte Geradnahtrohr (1) um eine Entfernung fortbewegt, die kleiner als die Länge der Schneidzone (L) um einen Wert ist, der sich in Grenzen von 2 bis 10 % der Länge der Schneidzone (L) bewegt.

2. Vorrichtung zur Realisierung des Verfahrens nach Anspruch 1, die eine Stange (7) die sich im elektrisch geschweißten Geradnahtrohr (1) befindet und an einem unbeweglichen Widerlager (8) befestigt ist, und ein Gehäuse (6) eines Mehrmeißelwerkzeugs mit in ihm befestigten Meißeln (3) bei denen der Abstand zwischen der ersten und der letzten Schneide (4) der Länge der Schneidzone(L) entspricht, enthält, das mit der Stange (7) mechanisch verbunden und mit Stützrollen (11, 12, 13) ausgerüstet ist, die auf Drehachsen (11',12', 13') sitzen und mit der Innenfläche des elektrisch geschweißten Geradnahtrohrs (1) in Kontakt stehen, dadurch gekenzeichnet, daß die Schneiden (4) aller Meißel (3) mit gleichem Abstand voneinander, der einer Schrittlänge (K) entspricht, und in gleicher Höhe von der gedachten Längsachse (10) des Gehäuses (6) des Mehrmeißelwerkzeugs (2) angeordnet sind und eine Stützrolle (11), deren Drehachse $11^1$ senkrecht zu einer senkrechten Ebene steht, die durch die Schneiden (4) der Meißel (3) und die gedachte Längsachse (10) des Gehäuses (6) des Mehrmeißelwerkzeugs (2) verläuft, beweglich in dieser senkrechten Ebene angeordnet ist, und der Mittelpunkt der Drehachse ($11^1$) relativ zur gedachten Längsachse (10) des Gehäuses (6) des Mehrmeißelwerkzeugs (2) in die zu den Schneiden (4) der Meißel (3) des Mehrmeißelwerkzeugs (2) entgegengesetzte Seite versetzt ist, sich zwischen der Stange (7) und dem Mehrmeißelwerkzeug (2) befindet und in Form eines Nockens ausgebildet ist, der auf seinem Umfang zwei Abschnitte (15 und 16) enthält, wobei der Abschnitt (15) einen Teil eines Kreises mit dem Radius R darstellt, dessen Mittelpunkt mit dem Mittelpunkt der Drehachse ($11^1$) der Stützrolle (11) zusammenfällt, und eine Länge hat, die die Schrittlänge (K) zwischen den benachbarten Meißeln (3) um einen Wert übersteigt, der sich in Grenzen von 2 bis 10 % der Schrittlänge (K) bewegt, und so angeordnet ist, daß der Mittelpunkt (b) dieses Abschnitts mit der Exzenterlinie der Stützrolle (11) zusammenfällt, und der Abschnitt (16), der den Teil des Kreises des Abschnitts (15) fortsetzt, den Teil eines Kreises darstellt, dessen Mittelpunkt entlang der Exzenterlinie vom Mittelpunkt der Drehachse (11¹) der in Form eines Nockens ausgebildeten Stützrolle (11) um die Größe dieser Exzentrizität (e) in Richtung zum Abschnitt (15) versetzt ist und eine Länge hat, die kleiner als die Lange der Schneidzone (L) um einen Wert ist, der sich in Grenzen von 2 bis 10 % der Länge der Schneidzone bewegt, während die zwei anderen Stützrollen (12 und 13) im Gehäuse (6) des Mehrmeißelwerkzeugs (2) mit einer Verschiebung ihrer Drehachsen (12¹ und 13¹) von der gedachten Längsachse (10) des Gehäuses (6) in Richtung zu den Schneiden (4) der Meißel (3) des Mehrmeißelwerkzeugs (2) hin angeordnet sind, wobei die eine von diesen Rollen (13) federnd gelagert und an dem Ende des Gehauses (6) des Mehrmeißelwerkzeugs (2) angebracht ist, das von der Stange (7) entfernt ist, und die andere Stützrolle (12) mit einem Radius der Außenfläche, der den Wert R - e annimmt, auf ihrer Drehachse (12¹) zwischen der Stange ( 7 ) und der in Form eines Nockens ausgebildeten Stützrolle (11) starr angeordnet ist.

3. Vorrichtung zur Realisierung des Verfahrens nach Anspruch 1, die eine Stange (7), die sich im elektrisch geschweißten Geradnahtrohr (1) befindet und an einem unbeweglichen Widerlager (8) befestigt ist, und ein Gehäuse (6) eines Mehrmeißelwerkzeugs mit in ihm befestigten Meißeln (3) bei denen der Abstand zwischen der ersten und der letzten Meißelschneide (4) der Länge der Schneidzone (L) entspricht, enthält, das mit der Stange (7) mechanisch verbunden und mit Stützrollen (11 und 21) ausgerüstet ist, die auf Drehachsen (11' und 12') sitzen und mit der Innenfläche des elektrisch geschweißten Geradnahtrohrs (1) in Kontakt stehen, dadurch gekennzeichnet, daß sie eine Hülse (35) und eine Platte (32) hat, die starr mit der Hülse (35), die eine Stützrolle (39) hat, die an der Stange (7) starr befestigt ist, und mit dem Gehäuse (6) des Mehrmeißelwerkzeugs verbunden ist, wobei eine Stützrolle (11) dieses Gehäuses (6), die zwischen den Mehrmeißelwerkzeug(2) und dem Teil des Gehäuses (6) mit der starr befestigten Platte (32) angebracht ist, in Form eines Nockens ausgebildet ist, wobei die gedachten Längsachsen (38, 10, 37) entsprechend der Platte (32), des Gehäuses (6) des Mehrmeißelwerkzeugs und der Hülse (35) zusammenfallen und die Stützrolle (11), deren Drehachse (11¹) senkrecht zu einer senkrechten Ebene steht, die durch die Schneiden (4) der Meißel (3) und die gedachte Längsachse (10) des Gehäuses (6) des Mehrmeißelinstruments (2) verläuft, wobei der Mittelpunkt der Drehachse (11¹) relativ zur gedachten Längsachse (10) des Gehäuses (6) des Mehrmeißelwerkzeugs in die zu den Schneiden (4) der Meißel (37 entgegengesetzte Seite versetzt ist, auf ihrem Umfang zwei Abschnitte (15, 16) hat, der Abschnitt (15) stellt den Teil eines Kreises mit dem Radius R dar, dessen Mittelpunkt mit dem Mittelpunkt der Drehachse (11¹) dieser Stützrolle (11) zusammenfällt, eine Länge hat, die die Schrittlänge (K) zwischen den benachbarten Meißeln (3) des Mehrmeißelwerkzeugs (2) um einen Wert übersteigt, der sich in Grenzen von 2 bis 10 % der Schrittlänge (K) bewegt, und ist so gelegen, daß der Mittelpunkt (b) dieses Abschnitts mit der Exzenterlinie dieser Stützrolle (11) zusammenfällt, und der Abschnitt (16), der den Teil des Kreises des Abschnitts (15) fortsetzt, stellt den Teil eines Kreises dar, dessen Mittelpunkt entlang der Exzenterlinie vom Mittelpunkt der Drehachse (11¹) der Stützrolle (11) um den Wert der Exzentrizität (e) in Richtung zum Abschnitt (15) hin versetzt ist und eine Länge hat, die kleiner ist als die Länge der Schneidzone (L) um einen Wert, der sich in Grenzen von 2 bis 10 % der Länge der Schneidzone (L) bewegt, und die andere Stützrolle (12) des Gehauses (6) des Mehrmeißelwerkzeugs (2) mit dem Radius der Außenfläche, der den Wert R- e annimmt, auf ihrer Drehachse (12¹) starr befestigt ist mit einer Verschiebung des Mittelpunkts dieser Achse (12¹) von der gedachten Längsachse (10) des Gehäuses (6) in Richtung zu den Schneiden (4) der Meißel (3) und zwischen der Stützrolle (11) und dem Teil des Gehäuses (6) des Mehrmeißelwerkzeugs mit der starr befestigten Platte (32) angebracht ist, wobei die Schneiden (4) aller Meißel (3) des Mehrmeißelwerkzeugs (2) voneinander mit gleichem Abstand, der der Schrittlänge (K) gleicht, und in gleicher Höhe von der gedachten Längsachse (10) des Gehäuses (6) auf dessen Endabschnitt, der von dem Teil des Gehäuses (6) mit der starr befestigten Platte (32) entfernt ist, angebracht sind, wobei der Mittelpunkt der Drehachse (40) der Stützrolle (39) der Hülse (35), deren Radius der Außenflache den Wert des Radius' R annimmt, relativ zum Mittelpunkt der Drehachse

($11^1$) der in Form eines Nockens ausgebildeten Stützrolle (11) in die zu den Schneiden (4) der Meißel (3) des Mehrmeißelwerkzeugs (2) entgegengesetzte Seite um den Wert der dreifachen Exzentrizität (a = 3 e) dar in Form eines Nockens ausgebildeten Stützrolle (11) versetzt ist.

## Claims

1.   A method of removing the internal burr in electrically welded, longitudinally moved straight-seam pipes, consisting in the cutting edges (4) of a multiple tool (2) being positioned one behind the other on the welding seam provided with a burr (5) along the generatrix of an electrically welded straight-seam pipe (1), [and] the inner face of the electrically welded straight-seam pipe (1) being machined by the said cutting edges (4) along the welding seam in the cutting zone (L) bounded by the first and the last cutting edge (4) of the multiple tool (2), **characterized in that** the cutting edges (4) of the cutters (3) of the multiple tool (2) are arranged one behind the other at an equal distance corresponding to a step length (K) and are positioned at an equal distance from the generatrix of the electrically welded straight-seam pipe (1), the machining of the inner face along the welding seam of the electrically welded straight-seam pipe (1) in the cutting zone (L) is performed periodically, as alternately first the inner burr (5) is removed and then the cutting edges (4) of the cutters (3) of the multiple tool (2) are brought up to the inner face - to be machined - of the electrically welded straight-seam pipe (1) along the welding seam end are moved away therefrom, the duration of the removal of the inner burr (5) from the welding seam in each machining period of the inner face of the electrically welded straight-seam pipe (1) along the welding seam corresponding to the period in which the electrically welded straight-seam pipe (1) is moved forward by a distance which exceeds the step length (K) between the adjacent cutting edges (4) of the cutters (3) of the multiple tool (2) by an amount which ranges within limits of from 2 to 10% of the said step length (K), while the total duration of the moving away and bringing forward of the cutting edges (4) of the cutters (3) of the multiple tool (2) corresponds to the period in which the electrically welded straight-seam pipe (1) advances by a distance which is smaller than the length of the cutting zone (L) by an amount which ranges within limits of from 2 to 10% of the length of the cutting zone (L).

2.   A device for performing the method according to Claim 1, containing a rod (7), situated in the electrically welded straight-seam pipe (1) and secured to an immovable abutment (8), and a housing (6) of a multiple tool having cutters (3) which are secured therein and in which the distance between the first and the last cutting edge (4) corresponds to the length of the cutting zone (L), the housing (6) being mechanically connected to the rod (7) and provided with support rollers (11, 12, 13) which are mounted on rotation shafts (11', 12', 13') and are in contact with the inner face of the electrically welded straight-seam pipe (1), **characterized in that** the cutting edges (4) of all the cutters (3) are arranged at an equal distance - corresponding to a step length (K) - from one another and at the same height from the imaginary longitudinal axis (10) of the housing (6) of the multiple tool (2), and a support roller (11), the rotation shaft $11^1$ of which is at right angles to a vertical plane extending through the cutting edges (4) of the cutters (3) and the imaginary longitudinal axis (10) of the housing (6) of the multiple tool (2), is arranged so as to be movable in the said vertical plane, and the centre of the rotation shaft ($11^1$) is offset - relative to the imaginary longitudinal axis (10) of the housing (6) of the multiple tool (2) - into the side opposite to the cutting edges (4) of the cutters (3) of the multiple tool (2), is situated between the rod (7) and the multiple tool (2) and is constructed in the form of a cam containing two portions (15 and 16) on its periphery, the portion (15) forming part of a circle with the radius R, the centre of which coincides with the centre of the rotation shaft ($11^1$) of the support roller (11), and has a length which exceeds the step length (K) between the adjacent cutters (3) by an amount which ranges within limits of from 2 to 10% of the said step length (K), and is arranged in such a way that the centre (b) of this portion coincides with the eccentric line of the support roller (11), and the portion (16), which continues the part of the circle of the portion (15), forms part of a circle, the centre of which is offset in the direction towards the portion (15) along the eccentric line from the centre of the rotation shaft ($11^1$) of the support roller (11) constructed in the form of a cam by the size of this eccentricity (e) and has a length which is smaller than the length of the cutting zone (L) by an amount which ranges within limits of from 2 to 10% of the length of the cutting zone, while the two other support rollers (12 and 13) are arranged in the housing (6) of the multiple tool (2) with an offset of their

rotation shafts ($12^1$ and $13^1$) from the imaginary longitudinal axis (10) of the housing (6) in the direction towards the cutting edges (4) of the cutters (3) of the multiple tool (2), one of the said rollers (13) being mounted in a resilient manner and being attached to the end of the housing (6) of the multiple tool (2) which is remote from the rod (7), and the other support roller (12) with a radius of the outer face which assumes the value **R-e** is arranged rigidly on its rotation shaft ($12^1$) between the rod (7) and the support roller (11) constructed in the form of a cam.

3. A device for performing the method according to Claim 1, containing a rod (7), situated in the electrically welded straight-seam pipe (1) and secured to an immovable abutment (8), and a housing (6) of a multiple tool having cutters (3) which are secured therein and in which the distance between the first and the last cutting edge (4) corresponds to the length of the cutting zone (L), the housing (6) being mechanically connected to the rod (7) and provided with support rollers (11 and 12) which are mounted on rotation shafts (11' and 12) and are contact with the inner face of the electrically welded straight-seam pipe (1), **characterized in that** it has a sleeve (35) and a plate (32) which is connected rigidly to the sleeve (35), which has a support roller (39) rigidly secured to the rod (7), and to the housing (6) of the multiple tool, a support roller (11) of the said housing (6), which [support roller] is attached between the multiple tool (2) and the part of the housing (6) with the rigidly secured plate (32), being constructed in the form of a cam, the imaginary longitudinal axes (38, 10, 37) coinciding in accordance with the plate (32), of the housing (6) of the multiple tool and the sleeve (35), and the support roller (11), the rotation shaft ($11^1$) of which is at right angles to a vertical plane extending through the cutting edges (4) of the cutters (3) and the imaginary longitudinal axis (10) of the housing (6) of the multiple tool (2), the centre of the rotation shaft ($11^1$) being offset - relative to the imaginary longitudinal axis (10) of the housing (6) of the multiple tool - into the side opposite to the cutting edges (4) of the cutters (37) [*sic*], has two portions (15, 16) on its periphery, the portion (15) forming part of a circle with the radius R, the centre of which coincides with the centre of the rotation shaft ($11^1$) of the said support roller (11), has a length exceeding the step length (K) of the multiple tool (2) by an amount ranging within limits of from 2 to 10% of the step length (K), and is arranged in such a way that the centre (b) of this portion coincides with the eccentric line of the said support roller (11), and the portion (16), which continues the part of the circle of the portion (15), forms part of a circle, the centre of which is offset in the direction towards the portion (15) along the eccentric line from the centre of the rotation shaft ($11^1$) of the support roller (11) by the amount of the eccentricity (e) and has a length which is smaller than the length of the cutting zone (L) by an amount which ranges within limits of from 2 to 10% of the length of the cutting zone (L), and the other support roller (12) of the housing (6) of the multiple tool (2) with the radius of the outer face, assuming the value **R-e**, is rigidly secured on its rotation shaft ($12^1$) with an offset of the centre of the said shaft ($12^1$) from the imaginary longitudinal axis (10) of the housing (6) in the direction towards the cutting edges (4) of the cutters (3) and is attached between the support roller (11) and the part of the housing (6) of the multiple tool with the rigidly secured plate (32), the cutting edges (4) of all the cutters (3) of the multiple tool (2) being arranged at the same distance from one another which is equal to the step length (K), and at the same height from the imaginary longitudinal axis (10) of the housing (6) on the end portion thereof, which is remote from the part of the housing (6) with the rigidly secured plate (32), the centre of the rotation shaft (40) of the support roller (39) of the sleeve (35), the radius of the outer face of which assumes the value of the radius R, being offset - relative to the centre of the rotation shaft ($11^1$) of the support roller (11) constructed in the form of a cam - into the side opposite the cutting edges (4) of the cutters (3) of the multiple tool (2) by the value of the three-fold eccentricity (**a = 3 e**) of the support roller (11) constructed in the form of a cam.

**Revendications**

1. Procédé pour éliminer la bavure interne dans des tubes à soudure rectiligne soudés électriquement, déplacés longitudinalement, qui consiste en ce que les tranchants de burin (4) d'un outil à burins multiples (2) sont amenés en position les uns après les autres le long de la génératrice d'un tube à soudure rectiligne (1) soudé électriquement sur le joint soudé présentant une bavure, qu'on traite avec ces tranchants (4) la face interne du tube à soudure rectiligne (1) soudé électriquement le long du joint soudé dans la zone de coupe (L) délimitée par le premier et le dernier tranchant de burin (4) de l'outil à burins multiples (2), caractérisé en ce que les tranchants (4) des burins (3) de l'outil à burins multiples (2) sont disposés les uns derrière les autres à distance égale, qui correspond à une longueur de pas (K), et qui sont montés à une distance égale par rapport à la génératrice du tube à soudure rectiligne (1) soudé électriquement, en ce que le traitement de la face interne le long du joint soudé du tube à soudure rectiligne (1) soudé électriquement est effectué périodiquement dans la zone de coupe (L), en ce que, alternativement, la bavure interne (5) est enlevée, et les tranchants (4) des burins (3) de l'outil à burins multiples (2) sont amenés le long du joint soudé et éloignés de celui-ci à la surface interne à traiter du tube à soudure rectiligne (1) soudé électriquement, où, dans chaque période de traitement de la surface interne du tube à soudure rectiligne (1) soudé électriquement, le long du joint soudé, la durée de l'enlèvement de la bavure interne (5) du joint soudé correspond au laps de temps pendant lequel le tube à soudure rectiligne (1) soudé électriquement s'éloigne d'une distance, qui dépasse la longueur de coupe (K) entre les tranchants voisins (4) des burins (3) de l'outil à burins multiples (2) d'une valeur, qui maintient dans des limites de 2 à 10% de cette longueur de pas (K), pendant que la durée globale de l'éloignement et de l'approchement des tranchants (4) des burins (3) de l'outil à burins multiples (2) correspond au laps de temps pendant lequel le tube à soudure rectiligne (1) soudé électriquement s'éloigne d'une distance qui est plus petite que la longueur de la zone de coupe (L) d'une valeur qui se maintient dans des limites de 2 à 10% de la longueur de la zone de coupe (L).

2. Dispositif pour la mise en oeuvre du procédé selon la revendication 1, comprenant une tige (7) située dans le tube à soudure rectiligne (1) soudé électriquement et fixée sur une butée immobile (8), ainsi qu'un boîtier (6) d'un outil à burins multiples contenant des burins (3) fixés à l'intérieur de celui-ci dont l'écartement entre le premier et le dernier tranchant (4) correspond à la longueur de la zone de coupe (L), qui est relié mécaniquement à la tige (7) et équipé de rouleaux de support (11, 12, 13), qui sont placés sur des axes de rotation (11', 12', 13') et sont en contact avec la face interne du tube à soudure rectiligne (1) soudé électriquement, caractérisé en ce que les tranchants (4) de tous les burins (3) sont disposés à distance égale les uns des autres, qui correspond à une longueur de pas (K), et à la même hauteur par rapport à l'axe longitudinal (10) imaginaire du boîtier (6) de l'outil à burins multiples (2) ainsi qu'un rouleau de support (11) dont l'axe de rotation (11$^1$) est perpendiculaire à un plan vertical qui s'étend à travers les tranchants (4) des burins (3) et de l'axe longitudinal imaginaire (10) du boîtier (6) de l'outil à burins multiples, et disposé mobile dans ce plan vertical, et en ce que le centre de l'axe de rotation (11$^1$) est décalé par rapport à l'axe longitudinal imaginaire (10) du boîtier (6) de l'outil à burins multiples (2) vers le côté opposé au tranchant (4) des burins (3) de l'outil à burins multiples (2), et situé entre la tige (7) et l'outil à burins multiples (2) et est réalisé sous la forme d'une came qui présente sur son pourtour deux tronçons (15 et 16), le tronçon (15) représentant une partie du cercle avec le rayon R dont le centre coïncide avec le centre de l'axe de rotation (11$^1$) du rouleau de support (11) et qui a une longueur qui dépasse la longueur de pas (K) entre les burins voisins (3) d'une valeur qui se maintient dans des limites de 2 à 10% de la longueur de pas (K), et est disposée de façon que le centre (b) de ce tronçon coïncide avec la ligne excentrique du rouleau de support (11), et en ce que le tronçon (16) qui prolonge la partie du cercle du tronçon (15) représente la partie du cercle dont le centre est décalé le long de la ligne excentrique par rapport au centre de l'axe de rotation (11$^1$) du rouleau de support (11) réalisé sous forme de came par la grandeur de cette excentricité (e) dans la direction vers le tronçon (15) et a une longueur qui est plus petite que la longueur de la zone de coupe (L) d'une valeur qui se maintient dans des limites entre 2 à 10% de la longueur de la zone de coupe, tandis que les deux autres rouleaux de support (12 et 13) sont disposés dans le boîtier (6) de l'outil à burins multiples (2) avec un décalage de leurs axes de rotation (12$^1$ et 13$^1$) par rapport à l'axe longitudinal imaginaire (10) du boîtier (6) dans la direction vers les tranchants (4) des burins (3) de l'outil à burins multiples (2), l'un de ces rouleaux (13) étant monté à ressort et est monté à l'extrémité du boîtier (6) de l'outil à burins multiples (2) qui est éloignée de la tige (7), et que l'autre rouleau de support (12), avec un rayon de la face externe qui prend la valeur R-e, est monté rigide, sur son axe de rotation (12$^1$) entre la tige (7) et le rouleau de support (11) réalisé en forme de came.

3. Dispositif pour la mise en oeuvre du procédé selon la revendication 1, comprenant une tige (7) qui se trouve dans le tube à soudure rectiligne (1) soudé électriquement et est fixé sur une butée immobile (8), ainsi qu'un boîtier (6) d'un outil à burins multiples contenant des burins (3) fixés à l'intérieur de celui-ci dont l'écart entre le premier et le dernier tranchant de burin (4) correspond à la longueur de la zone de coupe (L), qui est relié mécaniquement à la tige (7) et équipée de rouleaux de support (11 et 12) qui sont placés sur les axes de rotation (11' et 12') et sont en contact avec la face interne du tube à soudure rectiligne (1) soudé électriquement, caractérisé en ce qu'il comprend une gaine (35) et une plaque (32) reliée rigidement à la gaine (35), qui présente un rouleau de support (39) relié rigidement à la tige (7), et relié au boîtier (6) de l'outil à burins multiples, un rouleau de support (11) de ce boîtier (6) qui est monté entre l'outil à burins multiples et la partie du boîtier (6) contenant la plaque (32) fixée rigidement est réalisé sous la forme d'une came, où les axes longitudinaux imaginaires (38, 10, 37) correspondant à la plaque (32), au boîtier (6) de l'outil à burins multiples et à la gaine (35) coïncident, et le rouleau de support (11) dont l'axe de rotation (11¹) est perpendiculaire à un plan vertical s'étendant à travers les tranchants (4) des burins (3) et l'axe longitudinal imaginaire (10) du boîtier (6) de l'outil à burins multiples (2), le centre de l'axe de rotation (11¹) s'étendant relativement à l'axe longitudinal imaginaire (10) du boîtier (6) de l'outil à burins multiples étant décalé vers le côté opposé aux tranchants (4) des burins (3), présente sur son pourtour deux tronçons (15, 16), dont le tronçon (15) représentant la partie d'un cercle du rayon R dont le centre coïncide avec le centre de l'axe de rotation (11¹) de ce rouleau de support (11) présente une longueur qui dépasse la longueur de pas (K) entre les burins voisins (3) de l'outil à burins multiples (2) d'une valeur qui se maintient dans des limites de 2 à 10% de la longueur de pas (K) et est situé de façon que le centre (b) de ce tronçon coïncide avec la ligne excentrique de ce rouleau de support (11), et que le tronçon (16) qui prolonge la partie du cercle du tronçon (15) représente la partie d'un cercle dont le centre est décalé le long de la ligne excentrique par rapport au centre de l'axe de rotation (11¹) du rouleau de support (11) de la valeur de l'excentricité (e) dans la direction vers le tronçon (15) et a une longueur qui est plus petite que la longueur de la zone de coupe (L) d'une valeur qui se maintient dans des limites entre 2 à 10% de la longueur de la zone de coupe (L), et que l'autre rouleau de support (12) du boîtier (6) de l'outil à burins multiples (2), avec le rayon de la face externe qui prend la valeur R-e, est monté rigidement sur son axe de rotation (12¹), avec un décalage du centre de cet axe (12¹) par rapport à l'axe longitudinal imaginaire (10) du boîtier (6) dans la direction vers les tranchants (4) des burins (3) et est monté entre le rouleau de support (11) et la partie du boîtier (6) de l'outil à burins multiples avec la plaque (32) fixée rigidement, les tranchants (4) de tous les burins (3) de l'outil à burins multiples (2) étant montés à distance égale les uns par rapport aux autres, qui correspond à une longueur de pas (K), et à la même hauteur par rapport à l'axe longitudinal imaginaire (10) du boîtier (6) sur son tronçon extrême, qui est éloigné de la partie du boîtier (6) comprenant la plaque (32) fixée rigidement, le centre de l'axe de rotation (40) du rouleau de support (39) de la gaine (35), dont le rayon de la face externe prend la valeur du rayon R, étant décalé par rapport au centre de l'axe de rotation (11¹) du rouleau de support (11) réalisé sous forme de came vers le côté opposé aux tranchants (4) des burins (3) de l'outil à burins multiples (2) d'une valeur de l'excentricité triple (a = 3e) du rouleau de support (11) réalisé sous forme de came.

FIG. 1

FIG. 2

FIG. 3

FIG. 4

FIG. 5

FIG. 6